# EUROPEAN PATENT APPLICATION

(11) **EP 3 893 139 A1**
(43) Date of publication of application: **13.10.2021**
(21) Application number: 19892061.3
(22) Date of filing: 31.10.2019
(51) Int. Cl.: G06F 21/62

(54) **INFORMATION PROCESSING DEVICE, INFORMATION PROCESSING METHOD, AND INFORMATION PROCESSING PROGRAM**

(30) Priority: 05.12.2018 JP 2018227843; 29.03.2019 JP 2019067368
(71) Applicant: Sony Corporation, 108-0075 Tokyo (JP)
(72) Inventor: SUGAYA, Shigeru, Tokyo 108-0075 (JP)
(74) Representative: MFG Patentanwälte Meyer-Wildhagen Meggle-Freund Gerhard PartG mbB
(86) International application number: PCT/JP2019/042782
(87) International publication number: WO 2020/116060

(57) **Abstract**

An information processing device includes a condition setting unit that sets a change condition that is a condition for changing data, and a data processing unit that changes the data in a case where the change condition is satisfied.

## Description

### TECHNICAL FIELD

The present technology relates to an information processing device, an information processing method, and an information processing program.

### BACKGROUND ART

In recent years, with development of the Internet, not only companies but also individual users upload data such as images and videos to the Internet, and individual users post images in various image sharing sites and the like. Under such present circumstances, protection of privacy of individuals contained in such data becomes a problem.

Accordingly, a technique has been proposed to easily collect information from a user and provide the information to another user while protecting privacy (Patent Document 1).

### CITATION LIST

### PATENT DOCUMENT

Patent Document 1: Japanese Patent Application Laid-Open No. 2004-29940

### SUMMARY OF THE INVENTION

### PROBLEMS TO BE SOLVED BY THE INVENTION

However, the technique described in Patent Document 1 generates statistical information using sensor information supplied by an information provider between a person who provides information and a person who uses information, and supplies the information to an information user. Thus, information can be supplied to the information user without including personal information of the information provider, thereby providing the information to the information user while protecting the privacy of the information provider. Since information and data remain on the server or the like even after they are used, it is unknown what will happen to the information and data after that and whether they will be reused in some way. The fact that data uploaded by an individual to the Internet or a server keeps remaining there in a usable state eternally in the future is not appropriate from the viewpoint of protection of personal information contained in the information and data and privacy.

The present technology has been made in view of such points, and has an object to provide an information processing device, an information processing method, and an information processing program that can protect personal information and privacy by changing data.

### SOLUTIONS TO PROBLEMS

In order to solve the above-mentioned problems, a first technology is an information processing device including a condition setting unit that sets a change condition that is a condition for changing data, and a data processing unit that changes the data in a case where the change condition is satisfied.

Furthermore, a second technology is an information processing method including setting a change condition that is a condition for changing data, and changing the data in a case where the change condition is satisfied.

Moreover, a third technology is an information processing program that causes a computer to execute an information processing method including setting a change condition that is a condition for changing data, and changing the data in a case where the change condition is satisfied.

### BRIEF DESCRIPTION OF DRAWINGS

Fig. 1 is a block diagram illustrating a configuration of a terminal device.
Fig. 2 is a block diagram illustrating a configuration of an information processing unit.
Fig. 3 is a diagram illustrating a first example of data change.
Fig. 4 is a diagram illustrating a second example of data change.
Fig. 5 is a diagram illustrating a third example of data change.
Fig. 6 is a diagram illustrating a fourth example of data change.
Fig. 7 is a diagram illustrating a fifth example of data change.
Fig. 8 is a diagram illustrating an example of a user interface for inputting change conditions.
Fig. 9 is a flowchart illustrating processing in the information processing unit.
Fig. 10 is a flowchart illustrating a change process.
Fig. 11 is a block diagram illustrating a configuration of a system including a data collection device.
Fig. 12 is a sequence diagram of a system including the data collection device.
Fig. 13 is a block diagram illustrating a configuration of a data providing system 10.
Fig. 14 is a block diagram illustrating a configuration of a terminal device 1000.
Fig. 15 is a block diagram illustrating a configuration of a data collection device 2000.
Fig. 16 is a block diagram illustrating a configuration of a server 3000.
Fig. 17 is a sequence diagram illustrating a first outline of processing in the information providing system 10.
Fig. 18 is a sequence diagram illustrating a second outline of processing in the information providing system 10.
Fig. 19A is a diagram illustrating a frame of change-output parameter, and Fig. 19B is a diagram illustrating a data request communication frame.
Fig. 20 is a flowchart illustrating a change-output parameter registration process in the server 3000.
Fig. 21 is a flowchart illustrating a data storage process in the server 3000.
Fig. 22 is a flowchart illustrating a request process to the server 3000.
Fig. 23 is a flowchart illustrating a response process to a request in the server 3000.
Fig. 24 is a diagram illustrating an example of a user interface for an owner to set a change process.
Fig. 25 is a diagram illustrating an example of a user interface for the owner to set a change process.

### MODE FOR CARRYING OUT THE INVENTION

Hereinafter, embodiments of the present technology will be described with reference to the drawings. Note that the description will be made in the following order.
<1. First embodiment>
   [1-1. Configuration of terminal device 100]
   [1-2. Configuration of information processing unit 200]
   [1-3. Change condition and end condition]
   [1-4. Specific example of change process]
   [1-5. User interface]
   [1-6. Processing in information processing unit 200]
<2. Second embodiment>
   [2-1. Configuration of information providing system 10]
   [2-2. Configuration of terminal device 1000]
   [2-3. Configuration of data collection device 2000]
   [2-4. Configuration of server 3000]
   [2-5. Processing in information providing system 10 (first outline)]
   [2-6. Processing in information providing system 10 (second outline)]
   [2-7. Change-output parameter registration process in server 3000]
   [2-8. Data storage process in server 3000]
   [2-9. Request process to server 3000]
   [2-10. Response process to request in server 3000]
   [2-11. User interface]
<3. Modification example>

### <1. Embodiment>

### [1-1. Configuration of terminal device 100]

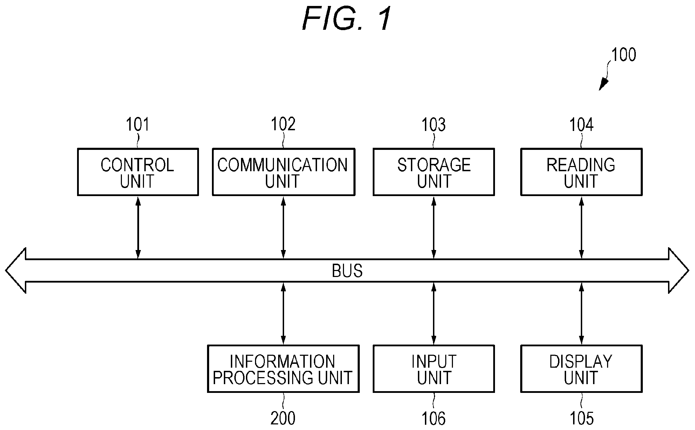

A configuration of a terminal device 100 in which the information processing unit 200 operates will be described with reference to Fig. 1. The terminal device 100 includes at least a control unit 101, a communication unit 102, a storage unit 103, a reading unit 104, a display unit 105, an input unit 106, and an information processing unit 200.

The control unit 101 includes a central processing unit (CPU), a random access memory (RAM), and a read only memory (ROM), and the like. The ROM stores programs that are read and operated by the CPU, and the like. The RAM is used as a work memory of the CPU. The CPU controls the entire terminal device 100 by executing various processes according to the programs stored in the ROM and issuing commands.

The communication unit 102 is a communication module that communicates with other devices and the Internet according to a predetermined communication standard. Communication methods include a wireless local area network (LAN) such as Wireless Fidelity (Wi-Fi), 4th generation mobile communication system (4G), broadband, Bluetooth (registered trademark), and the like.

The storage unit 103 is a storage medium including, for example, a hard disc drive (HDD), a semiconductor memory, a solid state drive (SSD), or the like, and stores content data such as image data, video data, audio data, text data, and moreover, data of applications, programs, and the like.

The reading unit 104 reads data from the storage unit 103 in response to a reading instruction from the user and supplies the data to the display unit 105 for display, and supplies the data to the communication unit 102 for transmission to the outside by the communication unit 102.

The display unit 105 is a display device for displaying contents such as images and videos, a user interface, and the like. As the display device, for example, there is a display device including a liquid crystal display (LCD), a plasma display panel (PDP), an organic electroluminescence (EL) panel, or the like. Note that in addition to the display unit 105, the terminal device 100 may include a speaker that outputs audio as an output device.

The input unit 106 includes various input devices for the user to input an instruction to the terminal device 100. The input unit 106 includes a button, a touch screen integrated with the display unit 105, and the like. When an input is made to the input unit 106, a control signal corresponding to the input is generated and output to the control unit 101 and the information processing unit 200. Then, the control unit 101 and the information processing unit 200 perform arithmetic processing and control corresponding to the control signal. Furthermore, the input unit 106 receives input from the user for performing various settings (change condition, end condition, and so on) for performing a change process by the information processing unit 200.

The information processing unit 200 is a processing unit configured by the terminal device 100 executing an application (program). The application may be installed in the terminal device 100, or may be distributed by downloading, storage media, or the like so that the user can install the application by himself or herself. Note that the information processing unit 200 may be achieved not only by a program but also by combining a dedicated device, a circuit, or the like by hardware having the function. The information processing unit 200 corresponds to an information processing device in the claims.

The terminal device 100 may be any device as long as it has a function of storing data, such as a smartphone, a personal computer, a tablet terminal, a camera, a wearable device, a smart speaker, a game device, a pet/humanoid robot that can connect to the Internet, a server device, various sensor devices, and various IoT (Internet of Things) devices. The present technology can be applied to any of such devices.

Note that the display unit 105 and the communication unit 102 are not indispensable configurations. For example, the terminal device 100 may be a server device that does not have the display unit 105, a camera that does not have the communication unit 102, or the like.

### [1-2. Configuration of information processing unit 200]

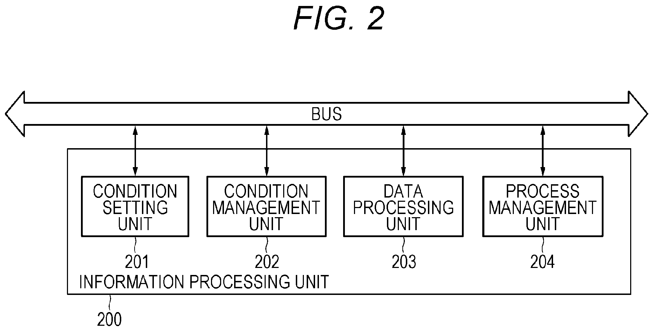

Next, a configuration of the information processing unit 200 will be described with reference to Fig. 2. The information processing unit 200 includes a condition setting unit 201, a condition management unit 202, a data processing unit 203, and a process management unit 204.

The condition setting unit 201 sets a change condition that is a timing when a change process is performed on data by the data processing unit 203 and an end condition that is a timing when the change process by the data processing unit 203 ends. As will be described in detail later, the change condition and the end condition include a condition based on time and a condition based on the number of accesses to data.

The condition setting unit 201 sets the change condition and the end condition on the basis of a content directly input from the user to the terminal device 100 or an input content of the user transmitted from another device to the terminal device 100. Furthermore, the condition setting unit 201 may automatically set the change condition and the end condition on the basis of a predetermined rule or a predetermined algorithm.

The condition management unit 202 determines whether or not the change condition and the end condition set by the condition setting unit 201 are satisfied. The change condition and end condition based on time can be determined on the basis of, for example, time information acquired from the terminal device 100 in which the information processing unit 200 operates, a clocking function of the information processing unit 200 itself, or the like. Furthermore, in a case where a change start time of data is set, it is determined whether or not the change start time has been reached on the basis of the time information acquired by the clocking function or the like.

With respect to the change condition and the end condition based on the number of accesses to the data, the condition management unit 202 determines whether or not the change condition and the end condition are satisfied on the basis of, for example, access number information included in access analysis information acquired from an access log aggregation function or the like of the terminal device 100 in which the information processing unit 200 operates.

The data processing unit 203 performs a change process on data as a processing target on the basis of a change method of data set on the basis of a content directly input from the user to the terminal device 100, a predetermined rule, a predetermined algorithm, and the like. A specific example of the change process will be described later.

The data as a target of processing in the present technology may be any content data such as image data, video data, audio data, and document data. Moreover, it is not limited to the content and may be a program (including application and software) or the like, and the data may be any data regardless of its type, format, purpose of use, mode of use, and the like.

In the following description, a state where information that original data before the change process has is not reduced is defined as a degree of change of 0%, information that the data has is reduced progressively by the change process and a state where the information that the data has becomes half is defined as a degree of change of 50%, and a state where all the information that the data has is erased is defined as a degree of change of 100%. The degree of reduction in the information that the data has will be expressed as a percentage.

Furthermore, the data processing unit 203 also performs a process of deleting the data as a processing target when the end condition is satisfied. Thus, after the end condition is satisfied, it becomes impossible to follow the trace of existence of the data as a processing target. Note that the process of deleting the data as a processing target is not a necessary process, and the data itself may be left in a state where the information is reduced.

The process management unit 204 supplies information indicating the set change method of data to the data processing unit 203, and manages the data processing unit 203 to perform an appropriate change process. Furthermore, upon receiving a notification from the condition management unit 202 that the change condition and the end condition are satisfied, the process management unit 204 manages the degree of change (change progress) according to the change condition and the end condition, and manages the data processing unit 203 so that an appropriate change process is performed according to the change condition and the end condition for notifying the data processing unit 203 of the degree of change. Note that the data processing unit 203 may include the function of the process management unit 204.

The information processing unit 200 is configured as described above. Note that the data may be data generated or acquired by the terminal device 100 itself that operates with the function of the information processing unit 200, or may be data generated or acquired by a device other than the terminal device 100 and supplied to the terminal device 100. Furthermore, the data may be data acquired by the terminal device 100 via the Internet. Devices that supply data to the terminal device 100 include smartphones, personal computers, tablet terminals, cameras, wearable devices, smart speakers, game devices, pet/humanoid robots that can connect to the Internet, server devices, various sensor devices, and various types of IoT devices, and the like.

### [1-3. Change condition and end condition]

Next, the change process of data by the data processing unit 203 of the information processing unit 200 will be described. First, the change condition and the end condition set by the condition setting unit 201 will be described. As described above, the conditions include change conditions which are timings of performing the change process of data and end conditions which are timings of ending the change process of data.

As the change conditions, there are conditions based on time and conditions based on the number of accesses to data. First, the conditions based on time will be described.

The end condition is a time point when a specified time elapses from a predetermined start date (for example, a time when the user inputs an end condition, or the like), and at a time point when the specified time elapses (when the end condition is satisfied), the degree of change in data becomes 100% and all information that the data has vanishes. One end condition is set for the data as a processing target.

The end condition can be set as a specific date and time, or can be set as a specific time calculated from the specific date and time. For example, it can be set to "10:10 on October 10, 2018" or "one year after October 10, 2018". Note that in a case where only the date is set, such as "October 10, 2018", it is only required to automatically set a predetermined time, for example, 0:00, the time when the setting is input, or the like.

The change condition is a time point when a specified time elapses from a predetermined start date (for example, the current time when the user inputs the change condition, or the like), and at a time point when the specified time elapses, the degree of change in data becomes a predetermined degree, that is, the information that the data has is reduced. A plurality of change conditions is set for data as a processing target within a period until the end condition is satisfied. The data processing unit 203 reduces the information that the data has at the timing when each of the plurality of change conditions is satisfied, and erases all information that the data has at a time point when the end condition is satisfied.

The change condition can be set at a specific date and time, or can be set as a specific time calculated from the specific date and time. For example, "first change condition: 10:10, October 10, 2018, second change condition: 10:10, November 10, 2018, third change condition: 10:10, December 10, 2018,..." can be set, or "every month from October 10, 2018" can be set. Note that in a case where only the date is set, such as "October 10, 2018", it is only required to automatically set a predetermined time, for example, 0:00, the time when the setting is input, or the like.

The unit of time for specifying the change condition may be any of seconds, minutes, hours, days, months, or years. For example, three hours after a change condition input time, one month after a change condition input time, one year after a change condition input time, and the like can be set.

Note that setting of half-life may be allowed. The half-life is a time elapsed from a change start time when the degree of change in data reaches 50%.

Next, conditions based on the number of accesses to data will be described. The number of accesses include some processing on data, such as reading data, displaying an image in a case where the data is an image, reproducing data in a case where the data is video or audio, opening data in a case where the data is text data, or the like, and executing data in a case where the data is a program. Note that the number of accesses may include some processing on the data, such as copy, cut and paste, and preview in addition to reading, displaying, reproducing, opening, or the like of the data itself.

The end condition is a time point when the number of accesses reaches a predetermined number from a predetermined start date (for example, the current time when the user inputs the end condition, or the like), and at a time point when the number of accesses reaches a predetermined number (time point when the end condition is satisfied), the degree of change in data becomes 100%, that is, all the information that the data has vanishes. One end condition is set for the data as a processing target.

The number of accesses as an end condition can be set as a specific number of accesses, for example, "1000 accesses".

The change condition is a time point when the number of accesses reaches a predetermined number from a predetermined start date (for example, the current time when the user inputs the change condition, or the like), and at a time point when the number of accesses reaches the predetermined number, information that the data has is reduced. A plurality of change conditions is set for the data as a processing target within a period until the end condition is satisfied. Information of the data is reduced at a timing when each of the plurality of change conditions is satisfied, and all information that the data has vanishes at a time point when the end condition is satisfied.

As the change condition, the number of accesses can also be set to a specific number of accesses like, for example, "100 accesses".

Note that the access analysis information may be used to perform a change process according to the number of accesses from a specific country, a specific region, or a specific IP address. For example, only access to data from the United States is counted as the number of accesses as the change condition and the end condition, or the like.

It may be possible to set both the change condition based on time and the change condition based on the number of accesses by specifying the degree of change in information that the condition and the data have.

For example, it is also possible to set by specifying a specific number of accesses and degree of change, such that the number of accesses as the end condition that the degree of change is 100% is set to 1000, more specifically, the number of accesses is 100 and the degree of change is 10%, the number of accesses is 500 and the degree of change is 30%, and the number of accesses is 800 and the degree of change is 50%.

Note that the change condition and the end condition may be set by combining the time and the number of accesses. For example, the change condition can be set by the time, and the end condition can be set by the number of accesses. On the contrary, the change condition may be set by the number of accesses and the end condition may be set by the time.

Note that in a case where a condition input by the user is only the change condition, the condition setting unit 201 may automatically set the end condition on the basis of a predetermined rule or algorithm. Furthermore, in a case where a condition input by the user is only the end condition, the condition setting unit 201 may automatically set the change condition on the basis of a predetermined rule or algorithm.

For example, in a case where the user inputs "one year after the current time" as the end condition and the condition setting unit 201 sets it as the end condition, "every month from the current time" is automatically set as the change condition, or the like.

Note that the end condition may be set by both the condition of time and the condition of the number of accesses. For example, the number of accesses as the end condition is set to 10000, and a specific time, for example, "10:10 on October 10, 2028" is set. If the end condition is set only by the number of accesses, erasure of all information that the data has and deletion of the data do not happen and the data remains indefinitely unless the number of accesses satisfies the end condition. However, by setting both the time and the number of accesses in this way, the data can be deleted at a time point when the end condition of the time is satisfied even if the number of accesses does not satisfy the end condition.

### [1-4. Specific example of change process]

Next, the change process of data by the data processing unit 203 will be described. In the following description, it is assumed that the data is image data as an example. A change in data refers to becoming a state where information that an image has is reduced at every timing when the change condition is satisfied, and finally a subject, which is information in the image, vanishes completely at a degree of change of 100% and nothing can be seen (a state where there is no subject in the image). Note that in a state where the degree of change is 100%, that is, the subject completely vanishes from the image, the image data itself may be deleted or the image data itself may be left. Note that in a case where the image data is left, there will be nothing shown when it is attempted to view the image data, for example, only a state of one color of white or one color of black is displayed.

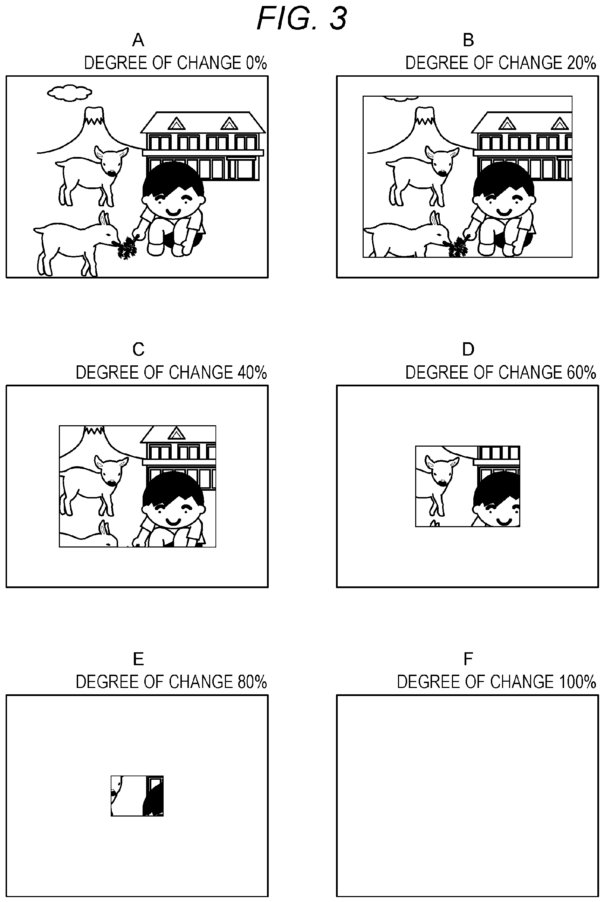

A first example of the change process is to reduce the information that the image has by narrowing a composition range of the image as illustrated in Fig. 3. In the example of Fig. 3, the composition range of the image gradually narrows from an outer peripheral portion of the image.

Fig. 3A is an original image before a change, and the degree of change is 0%. In Fig. 3B, the degree of change is 20%, and an outer peripheral portion of the image vanishes and the information in that range vanishes. Next, the degree of change is 400% in Fig. 3C, the degree of change is 60% in Fig. 3D, and the degree of change is 80% in Fig. 3E. Then, as illustrated in Fig. 3F, the information contained in the image vanishes completely at a time point when the degree of change reaches 100%.

Note that the vanishing of the composition range of the image does not necessarily have to proceed from the outer circumference to the center, and the information of an image may be caused to vanish from positions such as a right end to a left end, a left end to a right end, an upper end to a lower end, a lower end to an upper end, and a center to an outer circumference.

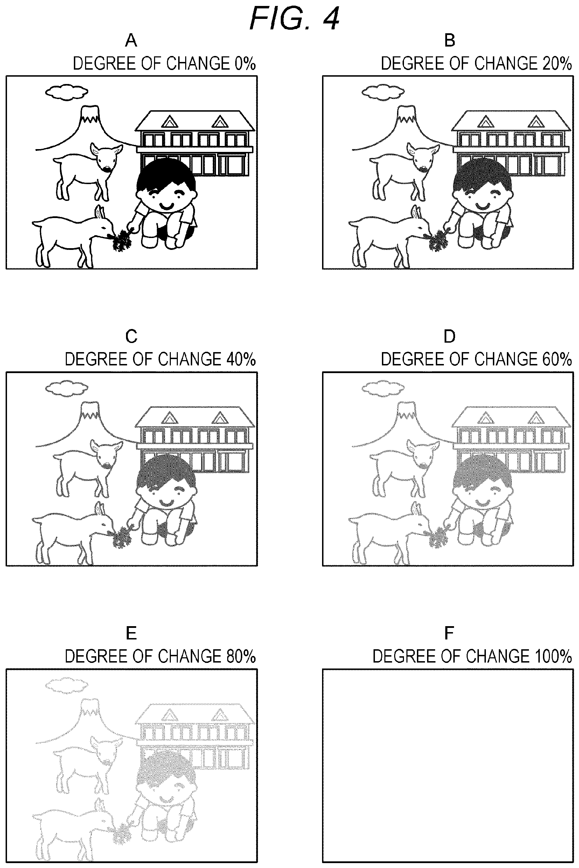

As illustrated in Fig. 4, a second example of the change process is to reduce the contrast of an image.

Fig. 4A is an original image before the change, and the degree of change is 0%. In Fig. 4B, the degree of change is 20%, and the image becomes lighter by lowering the contrast of the image by 20% from the original image. Next, Fig. 4C illustrates the degree of change of 40%, Fig. 4D illustrates the degree of change of 60%, and Fig. 4E illustrates the degree of change of 80%. Then, as illustrated in Fig. 4F, at a time point when the degree of change reaches 100%, the contrast in the image is lost, the subject is completely invisible, and the information contained in the image completely vanishes.

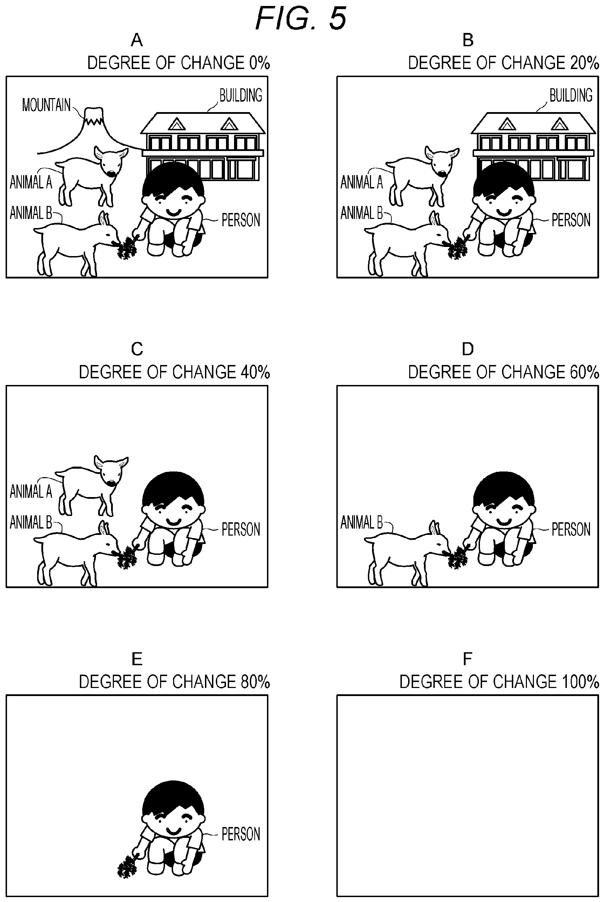

As illustrated in Fig. 5, a third example of the change process is to reduce the number of subjects by sequentially causing vanishing of a plurality of subjects existing in an image.

In order to execute this third example, the data processing unit 203 needs to be provided with a known subject recognition technique. As the known subject recognition technique, a method by template matching, a matching method based on brightness distribution information of the subject, a method based on a skin color part included in the image, a feature amount of a human face, or the like, a method using artificial intelligence, or the like may be used. Furthermore, these methods may be combined to improve recognition accuracy. Note that the information processing unit 200 may have a subject recognition unit having a configuration different from that of the data processing unit 203, and the data processing unit 203 may perform a change process using subject information from the subject recognition unit.

In this third example, in order to perform the change process, a subject recognition process is first performed on the image as a target of the change process to recognize the subject in the image. Fig. 5A illustrates an original image before the change, and a human, an animal A, an animal B, a mountain, and a building are recognized as subjects, and the degree of change is 0%.

In Fig. 5B, the degree of change is 20%, and the mountain is erased as a first stage of change. Next, in Fig. 5C, the degree of change is 40%, and the building is erased as a second stage of change. Subsequently, in Fig. 5D, the degree of change is 60%, and the animal A is erased as a third stage of change. Furthermore, in Fig. 5E, the degree of change is 80%, and the animal B is erased as a fourth stage of change. Then, in Fig. 5F, the degree of change is 100%, and as a fifth stage of change, the person is erased, all the subjects which are information that the image has are erased, and all the information is erased from the image.

In this manner, the data processing unit 203 erases the recognized subjects one by one every time the condition management unit 202 determines that the change condition is satisfied. Thus, the subject is erased from the image every time the change condition is satisfied until the end condition is satisfied, and finally all the subjects are erased from the image. Note that in Fig. 5 and the description of Fig. 5 above, the degrees of change in the images are expressed as percentages. However, the number of subjects recognized in the image is not limited to five, and the number and sizes of the subjects vary. Therefore, it is not always possible to express changes in the image that the subjects disappear as a percentage.

Note that since the number of subjects and the number of change conditions may not match, the number of subjects to be erased in a case where one change condition is satisfied is not limited to one, and may be two or more. Furthermore, in a case where a plurality of subjects remains at a time point when the end condition is satisfied, all the remaining subjects may be erased at the time point when the end condition is satisfied. Furthermore, all the subjects that are not recognized as individual subjects, for example, the background such as the sky, may be erased at a time point when the end condition is satisfied.

Furthermore, objects other than individual subjects may be registered as objects and erased fragmentarily each time the change condition is satisfied.

Furthermore, among the recognized subjects, for example, among those subjects recognized as a person, the clothes, belongings, and so on of the person may be determined to be unlikely to be components of main subjects and these subjects may be erased with priority.

A fourth example of the change process is to change the color of an image. A change in color includes a decrease in saturation and a decrease in brightness. Every time the change condition is satisfied, the saturation and/or brightness of the image is reduced, the image is gradually made monochrome, and at a time point when the end condition is satisfied, the image is made white or black and all the subjects completely vanish.

Furthermore, as the change process, the brightness may be reduced every time the change condition is satisfied.

Further, as the change process, the subjects in the image may be gradually made invisible by adding noise, adding block noise, filling, or the like every time the change condition is satisfied. It can be said that the process of adding noise to such data is a process of lowering the degree to which the information that the data has can be recognized. In a case of such a process of lowering the degree to which the user can recognize the information that the data has, the information that the data has becomes unrecognizable by the user at a time point when the end condition is satisfied.

Furthermore, in a case where there is metadata such as an exchangeable image file format (EXIF) associated with the image, as the information that the image has is reduced progressively, the metadata information may also be reduced progressively, and at a time point when the end condition is satisfied, all the information that the metadata has may be erased and the metadata itself may be deleted.

Furthermore, in a case where information of weather, people, and the like is extracted from the image using artificial intelligence or the like and used as metadata attached to the image, the information that the metadata has is also reduced progressively, and at a time point when the end condition is satisfied, all the information that the metadata has may be erased and the metadata itself may be deleted.

The data is not limited to images. For example, it may be data acquired by various sensors. The data obtained by sensors includes temperature data obtained by a temperature sensor, position data obtained by GPS, precipitation data obtained by a rainfall sensor, and the like.

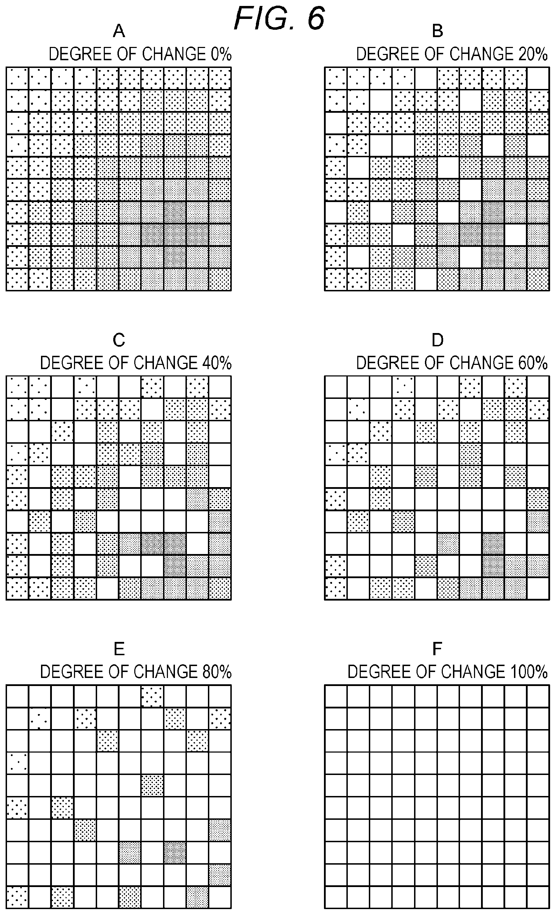

Fig. 6 is a diagram illustrating temperature data, and as an example, illustrates the temperature at a total of 100 points in a 10 × 10 matrix. A dark color represents a high temperature, and the temperature decreases as the color becomes lighter. Whenever the change condition is satisfied in such data, the temperature information may be erased fragmentarily as a change in the data.

Fig. 6A illustrates the original data before the change, and the degree of change is 0%. In Fig. 6B, the degree of change is 20%, and the temperature information at multiple points that correspond to 20% turns white and is in a missing state. This indicates that the temperature information at that point is erased by the change process. Next, in Fig. 6C the degree of change is 40%, in Fig. 6D the degree of change is 60%, in Fig. 6E the degree of change is 80%, and as illustrated in Fig. 6F, the temperature information of all points is erased and turns white at a time point when the degree of change reaches 100%, and all the temperature information is erased. Note that in the example of Fig. 6, the points where the temperature information is erased are random.

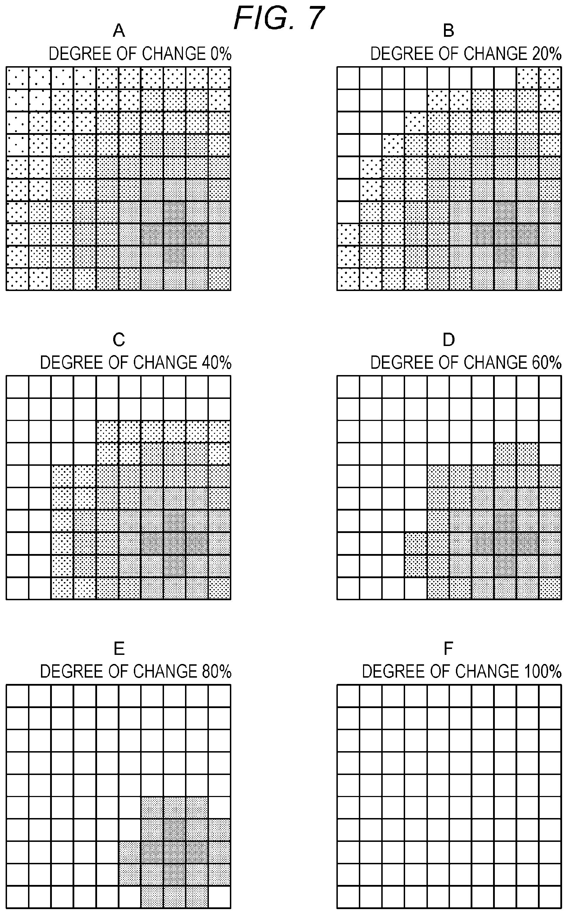

Furthermore, as illustrated in Fig. 7, in similar data to those in Fig. 6, the information may be erased fragmentarily rather than randomly, and finally the information at all points may be erased.

Furthermore, in a case where the data as a processing target is the sensor information measured at the same point every day for a predetermined period, daily sensor information may be erased every time the change condition is satisfied, and at a time point when the degree of change is 50%, that is, half of the entire sensor information is erased, only the sensor information every other day may remain. Also in this case, it becomes a state where the sensor information for all dates is erased at a time point when the end condition is satisfied.

Moreover, the data may be video data, music data, text data, or the like. For video data, similarly to images, methods of changing such as narrowing a composition range of video, reducing contrast, erasing subjects, changing colors, reducing brightness, and erasing subjects can be applied.

In audio data, the volume level may be lowered every time the change condition is satisfied, and information may be erased to have no sound at a time point when the end condition is satisfied. Furthermore, a voice recognition technique may be used to lower or erase the volume level progressively in order from a specific voice, for example, the voice of a specific person or a specific word. Furthermore, in music data, a publicly known musical instrument recognition technique may be used to lower or erase the sound level of a specific musical instrument progressively.

Furthermore, in a case of data having a reproduction time such as video data and audio data, information in a predetermined time range is erased every time the change condition is satisfied, and at a time point when the end condition is satisfied, all the information of the period from a reproduction start time to a reproduction end time may be erased.

In text data, characters in a predetermined range (page, number of lines, and the like) may be erased every time the change condition is satisfied, and all the characters may be erased at a time point when the end condition is satisfied.

### [1-5. User interface]

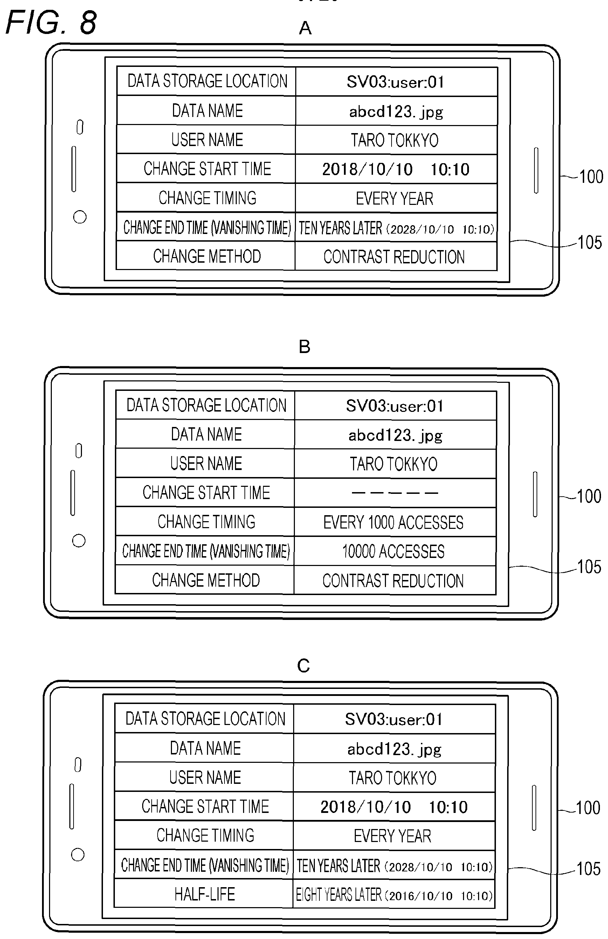

Next, input of change conditions, end conditions, change methods, and the like by the user will be described. Those that need to be set for the change process of data, such as change conditions, end conditions, and change methods, are collectively referred to as processing parameters. Fig. 8 is an example of a user interface displayed on the display unit 105 or the like of a smartphone as the terminal device 100 in which the information processing unit 200 operates.

Items of the processing parameters to be input by the user include data storage location, data name, user name, change start time, change end time (change condition), change end time (end condition), and change method.

The "data storage location" is an item for designating a location where data as a target of the change process is stored. In a case where the data is stored in a personally owned terminal device, it is a directory or folder name of a storage medium of the terminal device, and in a case where the data is stored in the server, it is a server name or the like.

The "data name" is an item for specifying data as a target of the change process. The "user name" is an item for inputting the name of a user who gives an instruction on the change process. Note that in some cases, the user may be unaware of the server name and use data without knowing the server name. Accordingly, without setting the server name as an indispensable input item, data matching the data name may be retrieved from the server with which the terminal device 100 of the user can communicate from the data name.

As illustrated in Fig. 8A, "change start time" is an item for inputting the start of change by time, date and time, and the like. As the change start time, a specific date and time can be input, or it can be input as a time point when a specific time has elapsed from the specific date and time. For example, "10:10, October 10, 2018" can be input, or "one year after the current time" can be input. The designated time may be seconds, minutes, hours, days, months, or years. For example, three hours after the change start time, one month after the change start time, one year after the change start time, and so on can be input.

Note that it is not always necessary to input and set the change start time. This is because even if there is no setting of the change start time, if the change condition is set with a specific date and time or number of accesses, the data is subjected to the change process at every timing when the change condition is satisfied until the end condition is satisfied.

The "change timing" corresponds to the change condition, and as illustrated in Fig. 8A, for example, if "every year" is set, the change process of data will be performed every year until the change end time, such as timing of one year later, timing of two years later, timing of three years later,... and so on from the change start time.

The change timing (change condition) can also be input by the number of accesses. As illustrated in Fig. 8B, for example, if "every 1000 accesses" is set, like the number of accesses to the data of 1000, 2000, 3000,..., the change process of data is performed by every 1000 accesses until the change end time.

The "change end time" corresponds to the end condition, and is an item for inputting a timing when the degree of change of the data finally reaches 100% and all the information that the data has vanishes. As illustrated in Fig. 8A, for example, "10 years later" means that the change will continue until 10 years after the change start time. Then, at the timing at the change end time, the degree of change of the data finally reaches 100%, and all the information that the data as a processing target has vanishes.

It is also possible to input the number of accesses at the change end time (end condition). As illustrated in Fig. 8B, for example, if it is "10000 accesses", the change process by the data processing unit 203 is continuously performed until the number of accesses to the data reaches 10000. Then, at a time point when 10000 accesses are reached, the degree of change of the data finally becomes 100% and all the information that the data has vanishes.

The "change method" is an item for inputting a mode of change as described with reference to Figs. 3 to 7. Input of this change method may be such that a plurality of change process methods that can be executed by the data processing unit 203 is presented to the user, and the user selects one from the methods. Further, in a case where the data processing unit 203 can perform only one change process, it is not necessary to input the change method. Furthermore, in a case where there is no input of the change method, the information processing unit 200 may determine the change method at random or by a predetermined algorithm.

When the user inputs an item of the processing parameter, the input content is supplied from the terminal device 100 to the information processing unit 200, and the information processing unit 200 makes a setting for the change process.

Note that the items of the processing parameter illustrated in the user interface illustrated in Fig. 8 are merely examples, and items to be input by the user are not limited to them. In addition to the items illustrated in Figs. 8A and 8B, it may be possible for the user to input other items. In the example illustrated in Fig. 8C, there is an item of half-life. This item of half-life is an item for setting the timing at which the degree of change becomes 50% from the change start time. Furthermore, the user name does not have to be a necessary item.

Furthermore, it may be possible to set whether to delete the data itself or keep the data itself in a case where the end condition is satisfied by input from the user.

### [1-6. Processing in information processing unit 200]

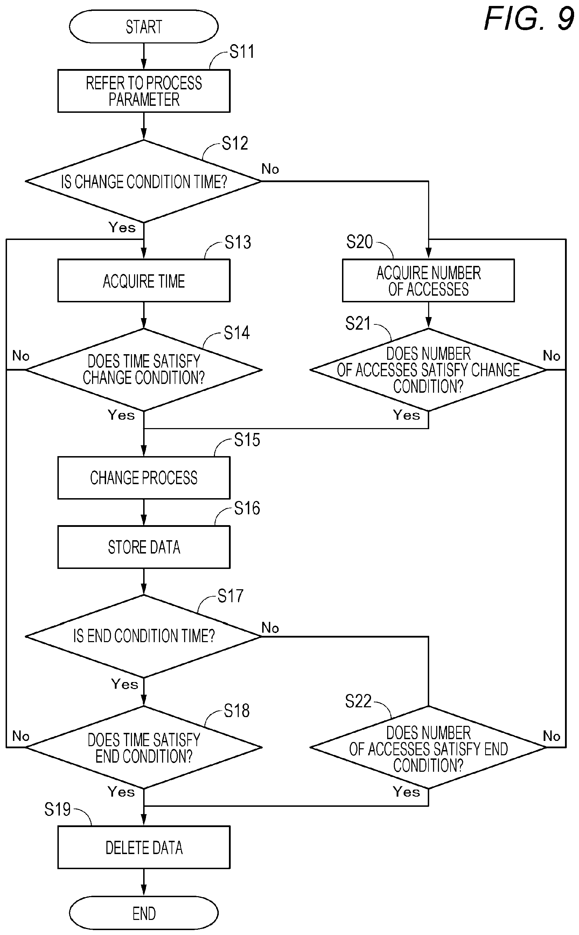

Next, processing in the information processing unit 200 will be described with reference to Fig. 9. First, in step S11, the processing parameters set in association with the data by input of the user are referred to.

Next, in step S12, it is determined whether the change condition is a condition of time or a condition of the number of accesses. In a case where the change condition is a condition of time, the process proceeds to step S13 (Yes in step S12).

Next, in step S13, the condition management unit 202 acquires time information. The time information can be acquired from, for example, a clocking function normally possessed by the terminal device 100 or the like in which an information processing device operates. Then, in step S14, the condition management unit 202 determines whether or not the change condition is satisfied on the basis of the time information. In a case where the change condition is not satisfied, step S13 and step S14 are repeated until the change condition is satisfied (No in step S14).

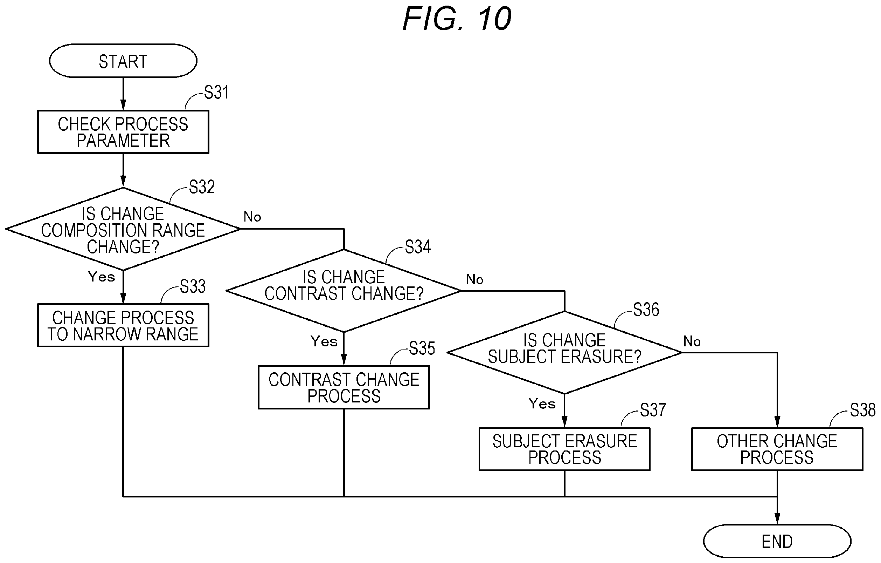

In a case where the change condition is satisfied, the process proceeds to step S15 (Yes in step S14), and the data processing unit 203 performs the change process of data. A detailed flow of the change process will be described later with reference to Fig. 10. Next, in step S16, a process of saving the data, which has been subjected to the change process, in a changed state is performed.

Next, in step S17, it is determined whether or not the end condition is a condition of time by referring to the set processing parameter. In a case where the end condition is a condition of time, the process proceeds to step S18 (Yes in step S17).

Next, in step S18, the condition management unit 202 determines whether or not the end condition is satisfied on the basis of the time information. In a case where the end condition is not satisfied, the process returns to step S13 (No in step S18). By repeating steps S13 to S18, the data is repeatedly subjected to the change process at a timing when the change condition is satisfied until the end condition is satisfied.

On the other hand, in a case where the end condition is satisfied in step S18, the process proceeds to step S19 (Yes in step S18). Then, in step S19, the data as a processing target is deleted and the processing ends.

The description returns to step S12. In a case where it is determined in step S12 that the change condition is not a condition of time, the process proceeds to step S20 (No in step S12). As described above, the change condition includes the condition of time and the condition of the number of accesses, and thus in a case where it is not the condition of time, the change condition is the condition of the number of accesses.

Next, in step S20, the condition management unit 202 acquires access number information for the data. The access number information can be acquired from the access log aggregation function of the terminal device 100 or the like in which the information processing unit 200 operates.

Next, in step S21, the condition management unit 202 determines whether or not the number of accesses satisfies the change condition. In a case where the number of accesses does not satisfy the change condition, step S20 and step S21 are repeated until it is satisfied (No in step S21).

In a case where the number of accesses satisfies the change condition, the process proceeds to step S15 (Yes in step S21), and the data processing unit 203 performs the change process of data. Next, in step S16, a process of saving the data, which has been subjected to the change process, in a changed state is performed.

Next, in step S17, it is determined whether or not the end condition is a condition of time by referring to the change information set in association with the data. In a case where the end condition is not a condition of time, the process proceeds to step S22 (No in step S17).

Next, in step S22, the condition management unit 202 determines whether or not the number of accesses satisfies the end condition. In a case where the number of accesses does not satisfy the end condition, the process returns to step S20 (No in step S22). By repeating steps S20, S21, S15, S16, S17, and S22, the change process is repeatedly applied to the data at a timing when the change condition is satisfied until the end condition is satisfied.

Then, in a case where the number of accesses satisfies the end condition in step S22, the process proceeds to step S19 (Yes in step S18), the data is deleted in step S19, and the process ends.

Next, the change process in step S15 in a flowchart of Fig. 9 will be described with reference to Fig. 10. First, in step S31, the data processing unit 203 checks the method of changing by referring to the processing parameters.

Next, in step S32, it is checked whether or not the change method is a change in the composition range of the image described with reference to Fig. 3. In a case where the change method is a change in the range of the image, the process proceeds to step S33 (Yes in step S32), and the data processing unit 203 performs on the image a process of narrowing the composition range of the image.

In a case where the change method is not the change in the range of the image in step S32, the process proceeds to step S34 (No in step S32). Next, in step S34, it is checked whether the change method is the contrast change of the image described with reference to Fig. 4. In a case where the change method is the contrast change of the image, the process proceeds to step S35 (Yes in step S34), and the data processing unit 203 performs a process of reducing the contrast on the image.

In a case where the change method is not the contrast change of the image in step S34, the process proceeds to step S36 (No in step S34). Next, in step S36, it is checked whether the change method is the change of subject erasure described with reference to Fig. 5. In a case where the change method is the change of subject erasure, the process proceeds to step S37 (Yes in step S36), and the data processing unit 203 performs the change process of subject erasure on the image.

In a case where the change method is not subject erasure in step S36, the process proceeds to step S38 (No in step S36). Then, in step S38, the image is subjected to another change process. The other processes is, for example, a change in the color of the image, or the like.

As described above, the data processing unit 203 performs the change process of data. Note that in a flowchart of Fig. 10, it is determined whether the change process is a change in the range of the image, a change in contrast, or a change in color, but the change process is not limited to these. They are change processes listed for convenience of explanation. As the types of processes that the data processing unit 203 can perform on the data increase, the number of branches in the processing of the flowchart of Fig. 10 also increases.

The present technology is configured as described above. According to the present technology, information that data has is gradually reduced instead of suddenly deleting the data itself in a case where a predetermined time elapses or at a time point when the number of accesses reaches a predetermined amount, and thus the data can be viewed and used for a certain period of time.

Further, by finally deleting the data itself, it is not possible to view or use the data afterward, and it is not possible to follow the trace of existence of the data. Thus, it is possible to improve the security level of data, and it is also possible to protect privacy. Furthermore, the user can save a labor of deleting data. Moreover, by finally deleting the data itself, it is possible to prevent the data from being continuously increased and pressing the capacity of the storage medium storing the data.

Furthermore, the start time, degree of decrease, and deletion time of information of data can be set according to the type of data, owner, attribute, usage status, usage mode, and so on, and thus it can be applied to various data.

Furthermore, it can also be applied to services such as existing image sharing sites on the Internet and various social networking services (SNSs) that allow users to view content such as images and videos only for a certain period of time. In a case of applying to such sites and services on the Internet, it can also be provided as a new service in which content will not simply become unviewable after a certain period of time, but the content will change over time or as the number of accesses increases.

Furthermore, for example, in image data, in a case where the change process for the data is the change in contrast, the change in color, or the like, if the information that the image has is reduced progressively, an image as if it has deteriorated over time can be obtained. Thus, there is also an effect such that an impression that the photograph has been through a long time since it was taken, a nostalgic impression like a film photograph, or the like can be given to the viewer.

Note that in the above-described embodiment, data is described on the premise that the data is generated or acquired by the terminal device 100 itself that operates with the function of the information processing unit 200, but the data may be one generated or acquired by a device other than the terminal device 100.

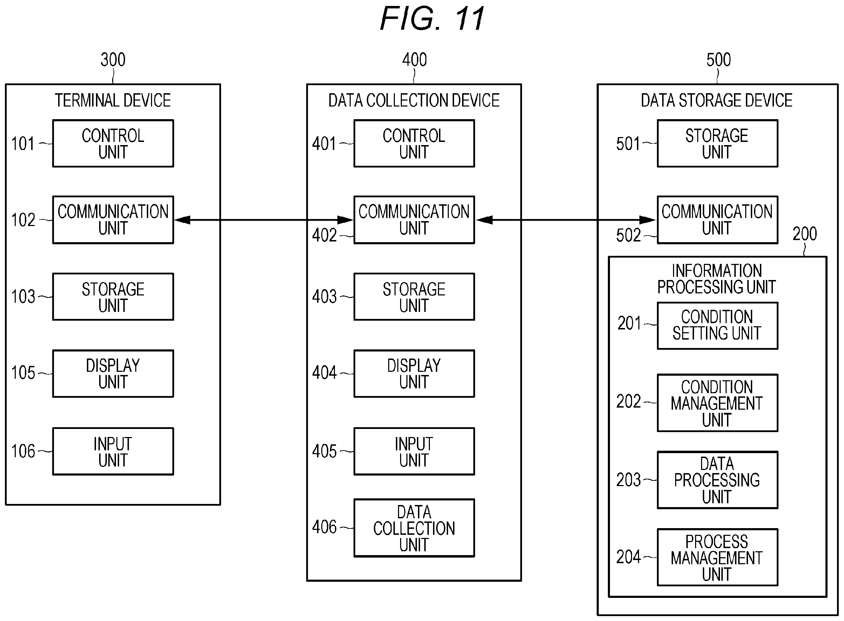

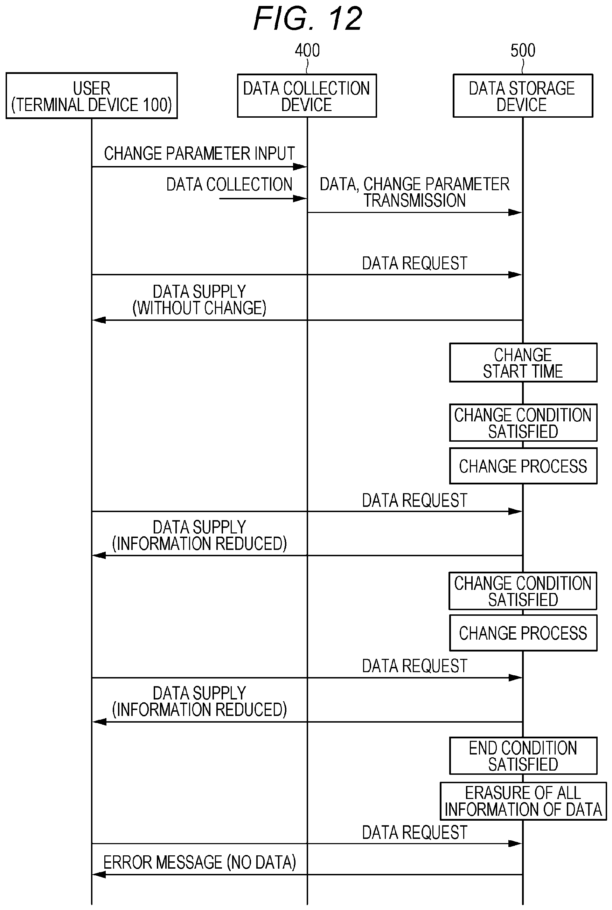

A case where data is acquired by a device other than the terminal device 100 will be described with reference to Figs. 11 and 12. Note that in the following description, the device for acquiring information is referred to as a data collection device 400.

Fig. 11 is a system diagram including the data collection device 400. The system includes a terminal device 300, the data collection device 400, and a data storage device 500. Since the terminal device 300 is similar to the terminal device 100, such as a smartphone, a personal computer, a tablet terminal, or the like mentioned in the above-described embodiment, their description will be omitted by referring to the content thereof.

The data collection device 400 includes a control unit 401, a communication unit 402, a storage unit 403, a display unit 404, an input unit 405, and a data collection unit 406.

The control unit 401 includes a CPU, a RAM, a ROM, and the like. The CPU controls the entire data collection device by executing various processes according to a program stored in the ROM and issuing commands.

The communication unit 402 is a communication module that communicates with other devices and the Internet according to predetermined communication standards. Communication methods include a wireless LAN such as Wi-Fi, 4G (4th generation mobile communication system), broadband, Bluetooth (registered trademark), and the like. The data collection device 400 is connected to the terminal device 300 and the data storage device 500 by communication in the communication unit.

The storage unit 403 is a storage medium including, for example, an HDD, a semiconductor memory, an SSD, or the like.

The display unit 404 is a display device for displaying contents such as images and videos, a user interface, and the like. As the display device, for example, there is a device including an LCD, a PDP, an organic EL panel, or the like. Note that, besides the display unit 404, the data collection device 400 may include a speaker that outputs audio as an output device.

The input unit 405 includes various input devices for the user to input an instruction to the data collection device 400. The input unit 405 includes a button, a touch screen integrated with the display unit 404, a microphone for voice input, and the like.

The data collection unit 406 includes functions for the data collection device 400 to acquire various data and includes various functions depending on the device as a specific data collection device, for example, various sensors such as a camera, a microphone, a temperature sensor, a position sensor such as a GPS, and an information transmission-reception function with other devices, and the like. Thus, the data collection device 400 may include a plurality of data collection units 406. The data collected by the data collection unit 406 includes data transmitted from the terminal device 300, data including information obtained from the user and/or the environment around the data collection device 400, and the like.

As the data collection device 400, there are smartphones, personal computers, tablet terminals, cameras, wearable devices, smart speakers, game devices, pet-type/human-type robots that can connect to the Internet, various sensor devices, various IoT devices, and the like.

The data collection device 400 transmits data constantly collected by the data collection unit 406 to the data storage device 500 by communication in the communication unit 402. The data may be transmitted periodically, or may be transmitted at the timing when predetermined data is acquired.

The data storage device 500 stores information collected by the data collection device 400 and supplied to the data storage device 500, and includes a storage unit 501 for storing data, a communication unit 502 for communicating, and a condition setting unit 201, a condition management unit 202, a data processing unit 203, and a process management unit 204, which have similar functions to those of the information processing unit 200 in the embodiment. The data storage device 500 includes a server device, a personal computer, and the like.

The system is configured as described above. Note that the number of data collection devices 400 used or owned by one user is not limited to one, and may be plural. For example, one user owns a smartphone, a smart speaker, a pet-type robot, and an IoT device as the data collection devices 400, and the like.

If information is collected by one or more data collection devices 400 and stored in the data storage device 500 in this manner, the capacity of the storage unit 502 of the data storage device 500 may be pressed. Thus, by using the present technology in the data storage device 500, information that data has is reduced over time and finally the data is deleted, and thus pressing the capacity of the storage unit 502 of the data storage device 500 can be prevented.

Note that the information processing unit 200 of the data storage device 500 may be capable of transmitting and outputting data with reduced information to the terminal device 300 such as a smartphone or a personal computer used by the user. Thus, the user can check the state of the data whose information has been reduced, and can use the data until the data is deleted.

Fig. 12 is a sequence diagram between the user, the data collection device 400, and the data storage device 500. First, the user inputs a processing parameter to the data collection device 400, and when the data collection device 400 collects data, the processing parameter and the data are associated with each other and transmitted to the data storage device 500. The user may input the processing parameter directly to the data collection device 400, or the processing parameter may be input to the terminal device 300 and transmitted from the terminal device 300 to the data collection device 400.

In a case where there is a request for data from the user, the data storage device 500 supplies the data to the user. This data may be supplied to the terminal device 300 used by the user, or may be supplied to the user via the data collection device 400.

In a case where there is a request for data from the user before the change start, data that has not been subjected to the change process and whose information has not been reduced is supplied to the user.

After reaching the change start time, the information processing unit 200 of the data storage device 500 performs the change process on data every time the change condition is satisfied, and the information that the data has is reduced progressively. Thus, in a case where there is a request for data from the user after the change start time, data with reduced information will be supplied to the user.

Then, when the end condition is satisfied, all the information that the data has is erased by the information processing unit 200 of the data storage device 500, and thus in a case where there is a request for data from the user subsequently, an error message will be sent to the user regarding the absence of data.

Note that the data storage device 500 described with reference to Figs. 11 and 12 may be provided to the user as a cloud service. Furthermore, one that stores data and performs the change process similarly to the data storage device 500 may be a device used by the user. For example, the terminal device 300 is a smartphone of the user, the data collection device 400 is a smart speaker of the user, the data storage device 500 is a personal computer of the user, and so on.

### <2. Second embodiment>

### [2-1. Configuration of information providing system 10]

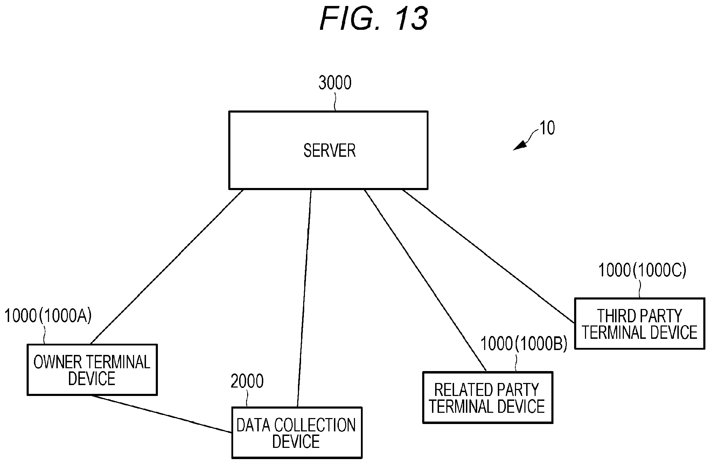

Next, a second embodiment of the present technology will be described. The second embodiment relates to request for and transmission of data in the information providing system 10 including a plurality of devices. As illustrated in Fig. 13, the information providing system 10 includes an owner terminal device 1000A, a related party terminal device 1000B, a third party terminal device 1000C, a data collection device 2000, and a server 3000. Note that the owner terminal device 1000A, the related party terminal device 1000B, the third party terminal device 1000C, and the data collection device 2000 are described one each. However, the describing of one each is for convenience of description, and any number of devices may be used as long as it is capable of communicating with the server 3000.

The owner terminal device 1000A is a terminal device owned and used by the owner of the data who requests for data from the server 3000.

The related party terminal device 1000B is a terminal device that is used by a person who is other than the owner but has a predetermined relationship (related party) with the owner to request the server 3000 to transmit data of the owner. This related party corresponds to "a person who has a predetermined relationship with an owner of data" in the claims.

The third party terminal device 1000C is a terminal device used by a third party who is a person other than the owner and the related party to request the server 3000 to transmit data of the owner. This third party corresponds to "a person who does not have a predetermined relationship with the owner of the data" in the claims.

The data collection device 2000 is a device owned and used by the owner, equipped with various sensors and the like, collects data related to the owner, and transmits the collected data at an arbitrary timing or periodically to the server 3000. Thus, the data collected by the data collection device 2000 and transmitted to the server 3000 is the data of the owner. Note that the owner terminal device 1000A may collect information similarly to the data collection device 2000 and transmit the information to the server 3000.

The server 3000 stores the data transmitted from the owner terminal device 1000A and/or the data collection device 2000. Then, the data is subjected to the change process and transmitted to each terminal device as necessary in response to a request from the owner terminal device 1000A, the related party terminal device 1000B, and the third party terminal device 1000C.

The owner terminal device 1000A, the related party terminal device 1000B, the third party terminal device 1000C, and the data collection device 2000 are each connected to the server 3000 via a network, and can transmit and receive data, request for data, and transmit data. Furthermore, the owner terminal device 1000A and the data collection device 2000 can also communicate via the network.

In the second embodiment, the data collection device 2000 collects the data of the owner of the owner terminal device 1000A and transmits the data to the server 3000, and the owner terminal device 1000A, the related party terminal device 1000B, and the third party terminal device 1000C request the server 3000 to transmit the data of the owner to itself.

### [2-2. Configuration of terminal device 1000]

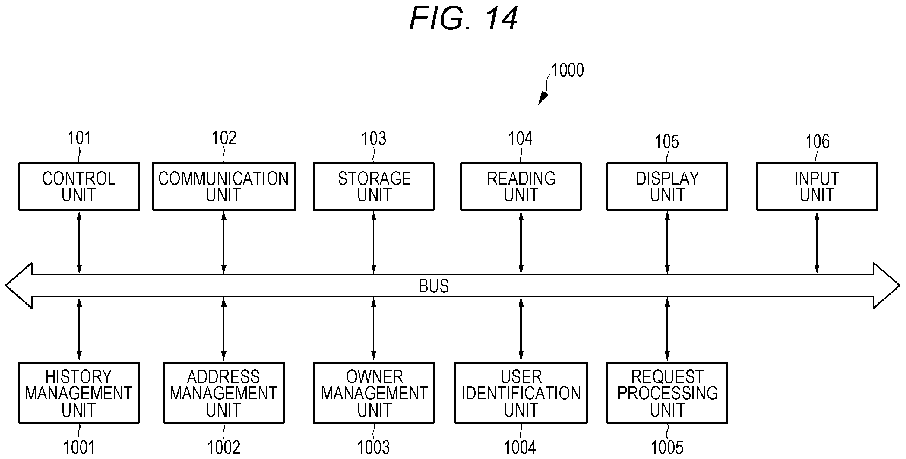

Next, a configuration of the terminal device 1000 will be described with reference to Fig. 14. In addition to the configuration of the terminal device 100 described with reference to Fig. 1, the terminal device 1000 further includes a history management unit 1001, an address management unit 1002, an owner management unit 1003, a user identification unit 1004, and a request processing unit 1005. Regarding the same components as those of the terminal device 100 of the first embodiment, the description will be omitted by using the same reference numerals. Note that in the first embodiment, the information processing unit 200 that performs the change process on data is provided in the terminal device 100, but in the second embodiment, the information processing unit is provided in the server 3000. Thus, the terminal device 1000 does not perform the change process on the data. Details will be described later.

The history management unit 1001 holds and manages a past communication history of the terminal device 1000. The communication history includes telephone numbers, names, call times, number of calls, call frequencies, and so on of the other party in a call history. Furthermore, there are names, addresses, number of transmissions and receptions, frequencies of transmission and reception, and so on of senders and recipients in e-mail and/or various message applications.

The address management unit 1002 manages information that can specify the terminal device 1000, such as a mail address, attribute information, and device ID assigned to the terminal device 1000 itself.

The owner management unit 1003 holds and manages information for specifying the owner of the terminal device 1000. The information that specifies the owner includes, for example, fingerprint information, voiceprint information, face information, vein information, and the like of the owner, and any information that can specify the owner may be used.

The user identification unit 1004 is a processing unit that identifies who is currently using the terminal device 1000. As an identification method, there is a method such that biometric information such as fingerprint information, voiceprint information, face information, and vein information of the user is acquired with various biosensors and compared with owner specification information managed by the owner management unit 1003 to identify whether the user is the owner or a non-owner. Furthermore, in a case where the terminal device 1000 holds specific information of a person other than the owner, for example, a person related to the owner such as a family member of the owner, the user can also be identified by comparing the biometric information with specific information of the person related to the owner.

The request processing unit 1005 collects various information for requesting the server 3000 for data and generates a data request communication frame. Data is requested by transmitting the data request communication frame to the server 3000. Details of the data request communication frame will be described later.

The terminal device 1000 is, for example, a smartphone, a personal computer, a tablet terminal, a camera, a wearable device, a game device, various IoT devices, or the like. The terminal device 1000 can be used as any of the owner terminal device 1000A, the related party terminal device 1000B, and the third party terminal device 1000C, and the configuration illustrated in the block diagram of Fig. 14 is common to the owner terminal device 1000A, the related party terminal device 1000B, and the third party terminal device 1000C.

### [2-3. Configuration of data collection device 2000]

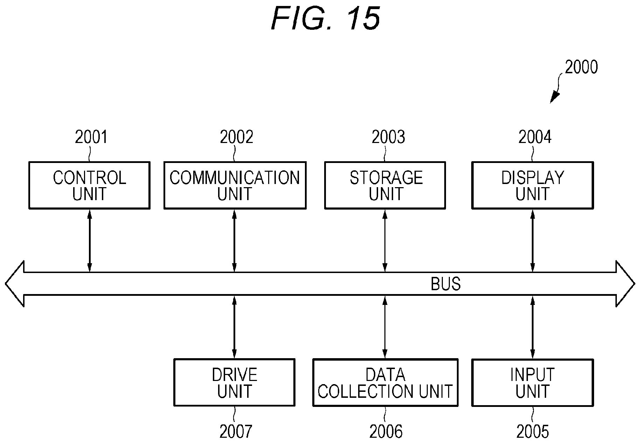

Next, a configuration of the data collection device 2000 will be described with reference to Fig. 15. The data collection device 2000 includes a control unit 2001, a communication unit 2002, a storage unit 2003, a display unit 2004, an input unit 2005, a data collection unit 2006, and a drive unit 2007. Since the control unit 2001, the communication unit 2002, the storage unit 2003, the display unit 2004, and the input unit 2005 are similar to those in the terminal device 100 described with reference to Fig. 1, the description thereof will be omitted.

Specific examples of the data collection device 2000 include robots, smart speakers, smartphones, various IoT devices, and the like.

The data collection unit 2006 is a component to collect various data, such as various sensors such as a biological sensor and an infrared sensor, a camera, and a microphone. The data collected by the data collection unit 2006 are various data that are, for example, biological data such as the pulse and body temperature of the user, images and videos of the user and surroundings thereof captured by a camera, voice from the user or voice around the user collected by a microphone, document data input by the user, image data, and the like. As long as it is data, the type and format do not matter.

The data collected by the data collection unit 2006 is stored in the storage unit 2003, and further transmitted to the server 3000 via the communication unit 2002. The data collection device 2000 itself may transmit all the data to the server 3000 without storing the collected data.

The drive unit 2007 includes parts such as a power unit such as a motor, a drive control unit, wheels, and legs for autonomous movement of the data collection device 2000. Note that in a case where the data collection device 2000 is other than a device that can move autonomously, such as a pet-type robot or a doll robot, the drive unit 2007 is not necessary because it does not move autonomously.

### [2-4. Configuration of server 3000]

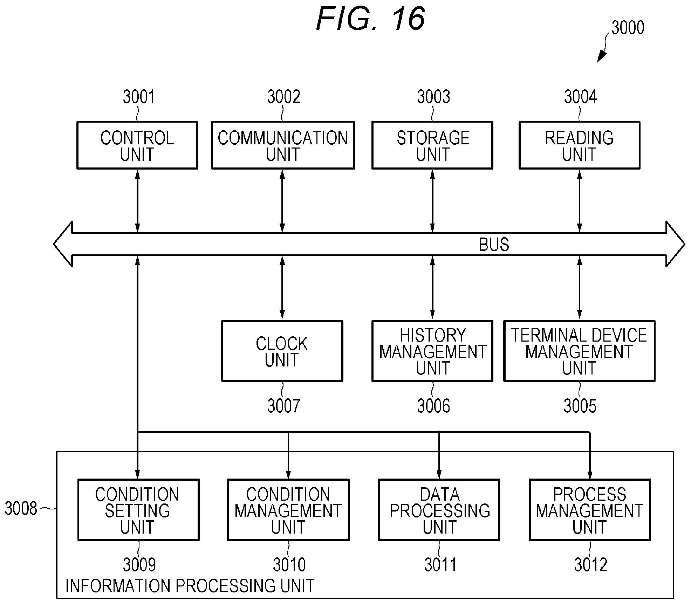

Next, a configuration of the server 3000 will be described with reference to Fig. 16. The server 3000 includes a control unit 3001, a communication unit 3002, a storage unit 3003, a reading unit 3004, a terminal device management unit 3005, a history management unit 3006, a clock unit 3007, and an information processing unit 3008.

The control unit 3001, the CPU including a CPU, a RAM, a ROM, controls the entire server 3000 by executing various processes according to a program stored in the ROM, and the like and issuing a command.

The communication unit 3002 is a communication module that communicates with the terminal device 1000 and the data collection device 2000 according to a predetermined communication standard. Communication methods include a wireless LAN such as Wi-Fi, 4G, broadband, Bluetooth (registered trademark), and the like. Data requested from the owner terminal device 1000A, the related party terminal device 1000B, and the third party terminal device 1000C is transmitted to each terminal device by communication by the communication unit 3002.

The storage unit 3003 is a storage medium including, for example, an HDD, a semiconductor memory, an SSD, or the like, and stores data transmitted from the owner terminal device 1000A and the data collection device 2000.

The reading unit 3004 reads data from the storage unit 3003 and supplies the data to the communication unit 3002 in response to a request for data from the owner terminal device 1000A, the related party terminal device 1000B, and the third party terminal device 1000C.

The terminal device management unit 3005 manages the terminal device 1000 registered in the server 3000 on the basis of a domain, device ID, biometric information of the user, and the like, specifies the terminal device 1000 that has transmitted the request to the server 3000, and determines whether or not to perform the change process on data and whether or not to transmit data.

The history management unit 3006 manages histories of requests from the owner terminal device 1000A, the related party terminal device 1000B, and the third party terminal device 1000C, and data transmissions from the server 3000, and manages when, to whom, and what data is transmitted on the basis of requests of when and from who.

The clock unit 3007 measures and manages the current time. For example, date and time information necessary for processing in the server 3000, such as the date and time when data is stored in the server 3000 and the date and time when the data is transmitted, is supplied to the history management unit 3006 and the like.

The information processing unit 3008 is similar to the information processing unit 200 in the first embodiment, and performs the change process on data as a processing target on the basis of a change method of data set on the basis of processing parameters, predetermined rules, a predetermined algorithm, and the like. The information processing unit 3008 includes a condition setting unit 3009, a condition management unit 3010, a data processing unit 3011, and a process management unit 3012. Since each of them is similar to the condition setting unit 201, the condition management unit 202, the data processing unit 203, and the process management unit 204 in the first embodiment, the description thereof will be omitted. The change process performed on data by the data processing unit 3011 of the information processing unit 3008 is similar to that in the first embodiment. In the second embodiment, the server 3000 performs the change process on the data transmitted from the terminal device 1000 and/or the data collection device 2000 and stored in the server 3000. Furthermore, the change process is performed on predetermined data on the basis of determination by the terminal device management unit 3005. Furthermore, as will be described in detail later, in the second embodiment, there may be cases where the data processing unit 3011 performs a process of restoring data that has been subjected to the change process once. In this respect, the second embodiment differs from the first embodiment. The information processing unit 3008 corresponds to an information processing device in the claims.

The information providing system 10 is configured as described above.

### [2-5. Processing in information providing system 10 (first outline)]

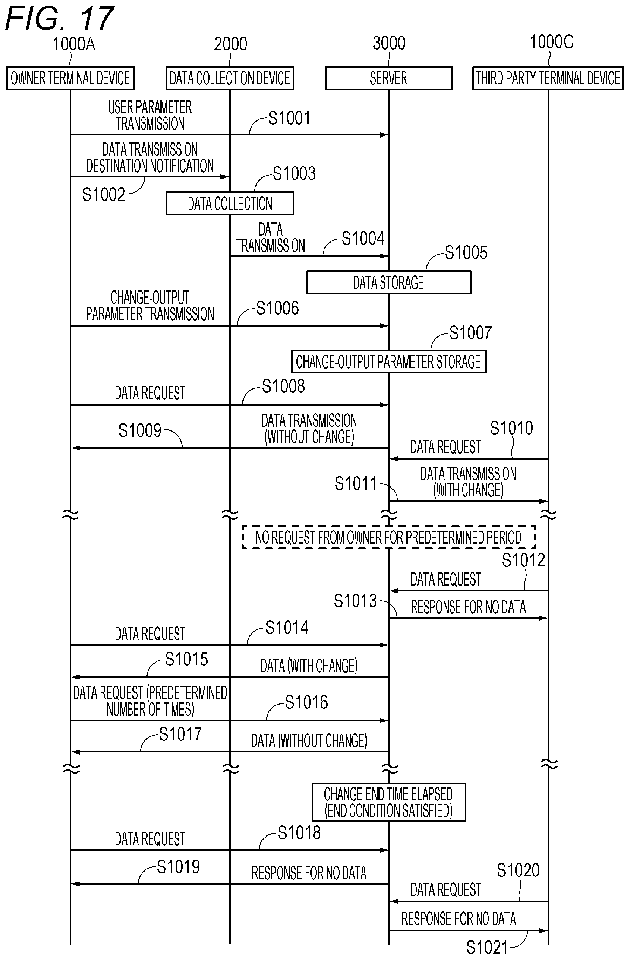

Next, an outline of processing among the owner terminal device 1000A, the third party terminal device 1000C, the data collection device 2000, and the server 3000 in the information providing system 10 will be described with reference to the sequence diagram of Fig. 17. In this first outline, it is assumed that all data requests from other terminal devices other than the owner terminal device 1000A used by the owner are requests from the third party terminal device 1000C.

First, in step S1001, the owner terminal device 1000A transmits to the server 3000 user parameters and the like for registering the owner to the server for the owner to use the server 3000.

Next, in step S1002, according to an input instruction from the owner, the owner terminal device 1000A transmits to the data collection device 2000 setting information for that a transmission destination of data collected by the data collection device 2000 is the server 3000. Thereafter, when the data collection device 2000 collects data as described in step S1003, the collected data is transmitted to the server 3000 as described in step S1004. In response to this, the server 3000 sets that the data transmitted from the data collection device 2000 is to be stored. Then, as described in step 1005, the data is stored in the server 3000. The data transmitted from the data collection device 2000 is associated in the server 3000 as information regarding the owner of the owner terminal device 1000A. Note that setting of the transmission destination of data being the server 3000 may be performed by the owner directly operating the data collection device 2000.

In step S1006, the change-output parameter is transmitted from the terminal device to the server 3000 by operating the terminal device of the owner. Then, in step S1007, the server 3000 stores the change-processing parameters in the storage unit 3003.

Then, in a case where there is a request for data from the owner terminal device 1000A as described in step S1008, the server 3000 transmits the requested data to the owner terminal device 1000A in a state of not being subjected to the change process, as described in step S1009.

On the other hand, in a case where there is a request for data from the third party terminal device 1000C as described in step S1010, the server 3000 transmits the data that has been subjected to the change process to the third party terminal device 1000C, as described in step S1011. This is because it is considered inappropriate to transmit the data of the owner in complete state in response to a request from a third party who is not the owner.

Furthermore, for data that has not been requested by the owner for a predetermined period, in a case where there is a request for the data from the third party terminal device 1000C as described in step S1012, the server 3000 erases all information that the requested data has, and transmits a response indicating that the requested data does not exist to the third party terminal device 1000C, as described in step S1013. Note that in this case, instead of the response indicating that the data does not exist, the data itself may be transmitted to the third party terminal device 1000C, but the data containing no information may be transmitted, with all information that the data has having vanished by the change process.

On the other hand, in a case where there is a request for data from the owner terminal device 1000A as described in step S1014 for data that has not been requested by the owner for a predetermined period, the server 3000 transmits to the owner terminal device 1000A the data that has been subjected to the change process, as described in step S1015. This is because data that has not been requested by the owner for a predetermined period is not important to the owner, and it is not desirable to leave such data in a complete state from the viewpoint of protecting the privacy of the owner. Furthermore, it is possible to prevent the capacity of the storage unit 3003 of the server 3000 from being pressed by reducing the information that the data has by the change process. In this change process, it is assumed that the degree of decrease in the information that the data has is smaller (the information is not decreased) compared to data transmitted in a case of being requested by the third party terminal device 1000C in step S1011.

However, in a case where there is a predetermined number of requests from the owner as described in step S1016 for data that has not been requested by the owner for a predetermined period, the server 3000 transmits the requested data to the owner terminal device 1000A in a state of not being subjected to the change process as described in step S1017. This is because even if the data has not been requested for a predetermined period, from the fact that thereafter the owner has requested the data a predetermined number of times, it is conceivable that the data has become more important to the owner. This is because it is appropriate that the data that has become more important to the owner is transmitted without reducing information.

Moreover, in a case where there is a request for data from the owner terminal device 1000A as described in step S1018 after the change end time has elapsed (the end condition is satisfied), the server 3000 transmits a response indicating that the requested data does not exist to the owner terminal device 1000A, as described in step S1019. This is because in a case where the change end time has elapsed, all the information that the data has is erased as in the first embodiment. Note that instead of the response indicating that the data does not exist, the data itself may be transmitted to the owner terminal device 1000A, but the data containing no information may be transmitted, with all information that the data has having vanished by the change process.

Similarly, in a case where there is a request for data from the third party terminal device 1000C as described in step S1020 after the change end time elapses (end condition is satisfied), the server 3000 causes all information that the data has to vanish by the change process, and a response indicating that the requested data does not exist is transmitted to the third party terminal device 1000C as illustrated in step S1021. Note that instead of the response indicating that the data does not exist, the data itself may be transmitted to the third party terminal device 1000C, but the data containing no information may be transmitted, with all information that the data has having vanished by the change process.

### [2-6. Processing in information providing system 10 (second outline)]

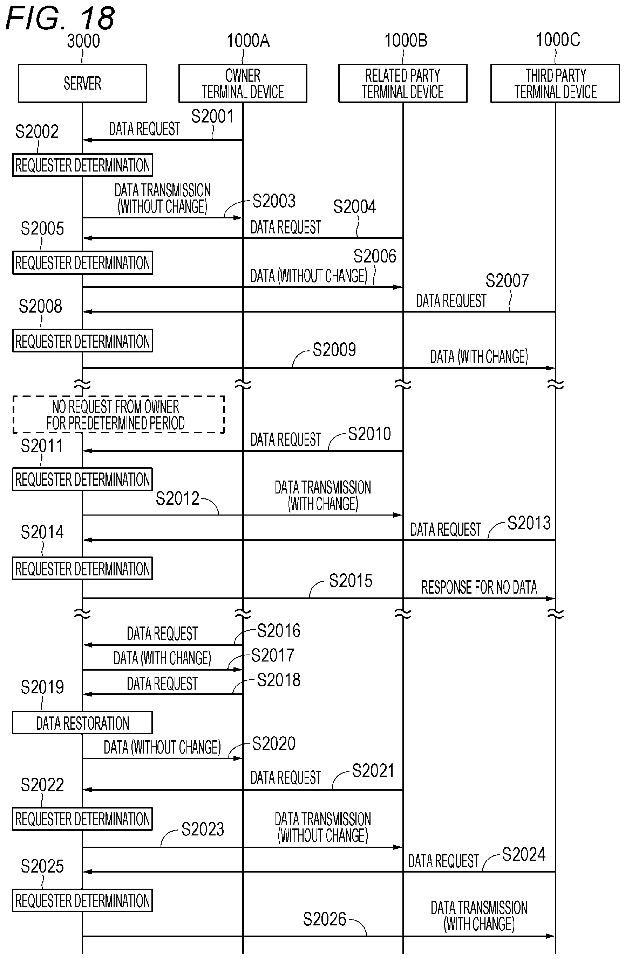

Next, a second outline of the processing in the information providing system 10 will be described with reference to the sequence diagram of Fig. 18. In the second outline, in addition to the owner terminal device 1000A, the server 3000, and the third party terminal device 1000C, there are related party terminal devices 1000B. This related party corresponds to "a person who has a predetermined relationship with an owner of data" in the claims. The related party terminal device 1000B is a terminal device used by a related party having a predetermined relationship with the owner. The predetermined relationship is, for example, a family member, a relative, a friend, a colleague, or the like, and can be arbitrarily determined by the owner.

Although the data collection device 2000 is not illustrated in Fig. 18, steps S1001 to S1007 in the first outline described with reference to Fig. 17 are similar in the second outline including the data collection device 2000. Also in the second outline, the data collection device 2000 collects the data of the owner and transmits the data to the server 3000. A difference of the second outline from the first outline is that the server 3000 determines who is the requester who requests data.

In a case where there is a request for data from the owner terminal device 1000A as described in step S2001, the server 3000 assumes that the request is from the owner in a requester determination in step S2002, and transmits the requested data to the owner terminal device 1000A in a state of not being subjected to the change process as described in step S2003.

Furthermore, in a case where there is a request for data from the related party terminal device 1000B as described in step S2004, the server 3000 assumes that the request is from the related party in the requester determination in step S2005, and transmits the data to the related party terminal device 1000B in a state of not being subjected to the change process as described in step S2006.

This is because in a case where the request is from a person who has a predetermined relationship with the owner, such as a family member, friend, or colleague, it is considered that data without being subjected to the change process may be transmitted for the reasons that the request source is specified, the request source is a reliable person, and the like.

Moreover, in a case where there is a request for data from the third party terminal device 1000C as described in step S2007, the server 3000 assumes that the request is from a third party in the requester determination in step S2008, and transmits the requested data to the third party terminal device 1000C in a state of being subjected to the change process as described in step S2009.

This is because in a case where the request is from a person who has no predetermined relationship with the user, it is considered to be appropriate to transmit data with reduced information by performing the change process for the reasons that the request source is not specified, the request source is unreliable, and the like.

Furthermore, for data that has not been requested by the owner for a predetermined period, as described in steps S2010 to S2012, the server 3000 transmits the requested data in a state of being subjected to the change process to the related party terminal device 1000B even if the request is from the related party terminal device 1000B as a result of the requester determination.

This is because data that is not requested by the owner is not important to the owner, and it is considered that such data should not be transmitted in a state of not being subjected to the change process even if the request is from a related party related to the owner. Furthermore, the data that is not requested by the owner is not important to the owner, and it is not desirable to transmit such data in a complete state to the related parties from the viewpoint of protecting the privacy of the owner. Moreover, it is possible to prevent the capacity of the storage unit 3003 of the server 3000 from being pressed by reducing the information that the data has by the change process.

For data that has not been requested by the owner for a predetermined period, as described in steps S2013 to S2015, in a case where the request is from a third party as a result of the requester determination, the server 3000 causes all the information that the data has to vanish by the change process and transmits a response indicating that the requested data does not exist to the third party terminal device 1000C. Note that in this case, instead of the response indicating that the data does not exist, the data itself may be transmitted to the third party terminal device 1000C, but the data containing no information may be transmitted, with all information that the data has having vanished by the change process. Data that is not requested by the owner is not important to the owner, and such data should not be transmitted to a third party for privacy reasons. Moreover, it is possible to prevent the capacity of the storage unit 3003 of the server 3000 from being pressed by causing all the information that the data has to vanish by the change process.

Moreover, even if it is data that has not been requested by the owner for a predetermined period, in a case where there are multiple requests from the owner as described in steps S2016 to S2018 and the data is transmitted in response to the request, as described in step S2019, the data processing unit 3011 may perform a process of restoring the data applied to the data (a process of returning to the state before the process) and transmit the data in a state of not being subjected to the change process as described in step S2020 to the owner terminal device 1000A. The restoration process can be implemented, for example, by securing data that has not been subjected to the change process, and replacing the data that has been subjected to the change process with the data that has not being subjected to the change process.

In this case, when there is a request for data from the related party terminal device 1000B as described in step S2021, the server 3000 assumes it as a request from the related party in the requester determination in step S2022, and as described in step S2023, the server 3000 transmits the requested data to the related party terminal device 1000B in a state of not being subjected to the change process.

This is because data that is not requested by the owner has not been important to the owner, but it is conceivable that data that is thereafter requested by the owner have regained importance or increased in importance, and it is considered that such data should be transmitted to anyone related to the owner.

Moreover, as described in step S2024, in a case where there is a request for data from the third party terminal device 1000C, the server 3000 determines in the requester determination in step S2025 that the request is from a third party, and as described in step S2026, the server 3000 transmits the requested data to the third party terminal device 1000C in a state of being subjected to the change process.

This is because even if it is data that is restored because there is a request from the owner for data that has not been requested for a predetermined period, in a case where the request is from a person who has no predetermined relationship with the user, it is considered to be appropriate to transmit data with reduced information by performing the change process for the reasons that the request source is not specified, the request source is unreliable, and the like.

The outline of the second embodiment of the present technology is as described above. Thus, in the second embodiment, as described in the first outline and the second outline, data is subjected to the change process according to the relationship between the data owner and the data requester.

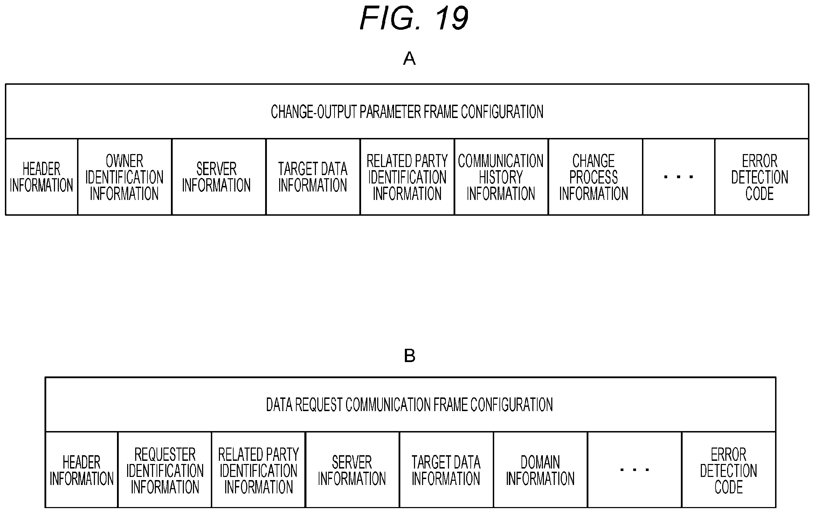

Here, a configuration of the change-output parameter transmitted from the owner terminal device 1000A to the server 3000 will be described with reference to Fig. 19A. The frame constituting the change-output parameter includes header information, owner identification information, server information, target data information, related party identification information, communication history information, change process information, and error detection code.

The header information stores a frame-specific preamble, various parameters, information indicating a frame type, and the like.

The owner identification information is information for identifying the owner of data collected by the data collection device 2000 and transmitted to the server 3000. The owner identification information includes the name, biometric information, password, and the like of the owner.

The server information is information that identifies the server 3000 in which data is stored. By referring to this information, the server 3000 can check that a transmission destination of the change-output parameter is not another server but the server 3000 itself.

The target data information is information for specifying data as a target of the change process, and includes a name of data, an attribute of data, and an extension that can specify a save format in a case where the data is stored in a specific file format, and the like.

The related party identification information is information for identifying a related party having a predetermined relationship with the owner of the owner terminal device 1000A. It is someone who has a predetermined relationship with the owner, for example, a family member, a friend, a colleague, or the like of the owner. The related party identification information includes an ID, mail address, telephone number, name of the related party, password, and the like of the terminal device used by the related party. When the server 3000 receives a request for data, the server 3000 can specify the source of the request for data by referring to the related party identification information and determine whether to transmit the data.

The communication history information is information that specifies a person whom the owner frequently contacts by telephone, mail, various message applications, and the like, and may be, for example, list information of call history of the terminal device and transmission-reception history of mails, or may be information extracted from these histories.

The change process information indicates the degree of change process performed on data, the type of change, and the like for each requester who requests for data. For example, data that has not been subjected to the change process is transmitted to the owner and related parties, data is transmitted to the related parties of the owner with information of the data reduced by 25% by the change process, data is transmitted to a third party other than the owner and the related parties of the owner with information of the data reduced by 50% by the change process, all data of information is erased and a third party is notified that there is no data, and so on. Furthermore, it is also possible to set the degree of change and the type of change according to the data type. For example, specific photograph data is transmitted with information reduced by 50%, specific video data is transmitted with information reduced by 80%, and so on. In this manner, the owner of data can arbitrarily set how the change process is performed. However, even without setting by the owner, it may be set automatically by the server 3000, or it may be set in advance by default.

Next, a configuration of the data request communication frame transmitted from the terminal device 1000 to the server 3000 to request data will be described with reference to Fig. 19B. The data request frame includes header information, requester identification information, related party identification information, server information, target data information, domain information, and error detection code.

The header information stores specific preambles, various parameters, information indicating a frame type, and the like.

The requester identification information is information for identifying a requester who requests data by using the terminal device 1000, and is information for specifying a party to which desired data is transmitted.

In a case where the requester is the owner of data, the related party identification information includes biological information of the requester, address information of the terminal device, a device ID, a telephone number, a password, and the like registered in the server 3000 by the owner. Further, in a case where the requester is a related party, the related party identification information is information indicating that the related party is a person who has a predetermined relationship with the owner and includes, for example, a telephone number of the owner, a password set with the owner, a telephone number of the related party, a name of the related party, a watchword, and the like. Furthermore, the related party identification information may be information specifying that a requester is in frequent contact with the owner, such as communication history and communication frequency information between the owner and the requester. In a case where this related party identification information is not included in the data request communication frame, the server 3000 assumes that there is no predetermined relationship between the requester and the owner and determines that the requester is a third party.

The server information is information that identifies the server 3000 in which requested data is stored. By referring to this information, the server 3000 can recognize that the request for data is not a request to another server but a request to the server 3000 itself.

The target data information is information for specifying data to be requested, for example, a name of data. In addition to the name of data, attribute of data, extension that can specify a save format in a case where the data is stored in a specific file format, and the like may be included.

The domain information is information about the domain of the server 3000, and may include various domain information such as country identification information, region identification information, and telecommunications carrier identification information.

### [2-7. Change-output parameter registration process in server 3000]

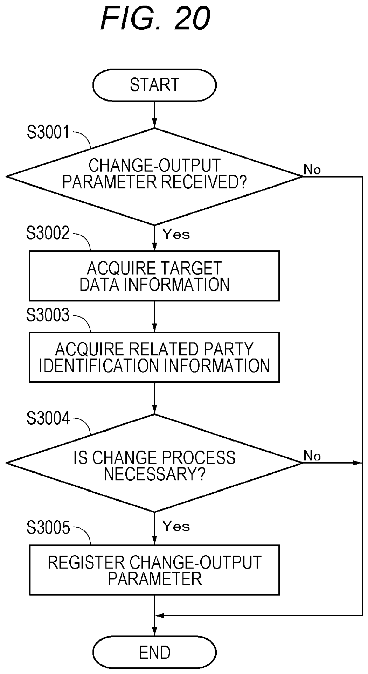

Next, a registration process of a change-output parameter in the server 3000 will be described with reference to a flowchart of Fig. 20.

When the server 3000 receives the change-output parameter in step S3001, the process proceeds to step S3002 (Yes in step 3001), and the server 3000 acquires the target data information from the change-output parameter. Thus, the server 3000 can specify the data as a target of the change process.

Next, in step S3003, the server 3000 acquires the related party identification information from the change-output parameter. Next, in step S3004, the server 3000 determines whether or not it is necessary to perform the change process by checking whether or not there is a requester for whom the change process should be performed by referring to the related party identification information. Since the data is changed and output to the related party and the third party in a predetermined case, it is determined that the change process needs to be performed in a case where the related party to which the data is transmitted by subjecting to the change process is set in the related party identification information.

In a case where the change process needs to be performed, the process proceeds from step S3004 to step S3005 (Yes in step S3004), the change process information is acquired from the change-output parameter, and the change-output parameter is registered in association with the target data in step S3006. The change-output parameter registration process is performed as described above.

### [2-8. Data storage process in server 3000]

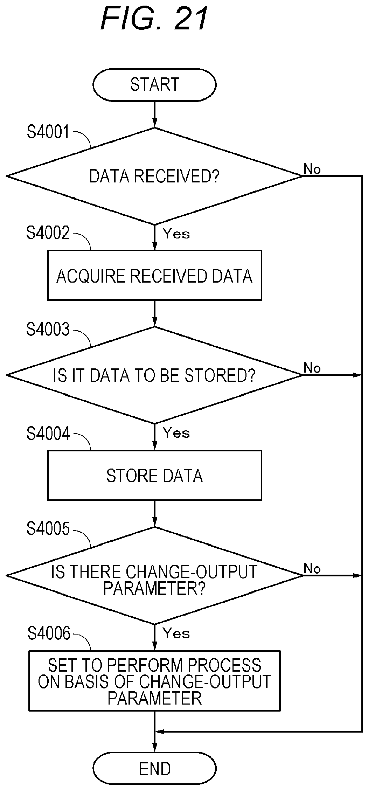

Next, a data storage process in the server 3000 will be described with reference to a flowchart of Fig. 21. When the server 3000 receives data from the data collection device 2000 in step S4001, the process proceeds to step S4002 (Yes in step S4001) and acquires the received data.

Next, in step S4003, the server 3000 checks whether it is set to store the data from the data collection device 2000, which is the source of the data received by itself. This setting can be checked by whether or not the server 3000 is set as the target of saving data from the data collection device 2000 when data is received from the data collection device 2000 in which the server 3000 is specified as the transmission destination of data from the owner terminal device 1000A in advance in step S1002 described above.

If it is set to store the data, the process proceeds to step S4004 (Yes in step S4003), and the server 3000 stores the received data.

Next, in step S4005, it is determined whether or not the change-output parameter corresponding to the stored data has been received from the owner terminal device 1000A, and in a case where it has been received, the process proceeds to step S4006 (Yes in step S4005). This determination can be checked by referring to the target data information in the process-output parameter. Then, in step S4006, the change-output parameter is registered in association with the data, and it is set to perform, in a case where there is a request for the data thereafter, the change process and output on the basis of the change-output parameter.

The registration process of data in the server 3000 is performed as described above.

### [2-9. Request process to server 3000]

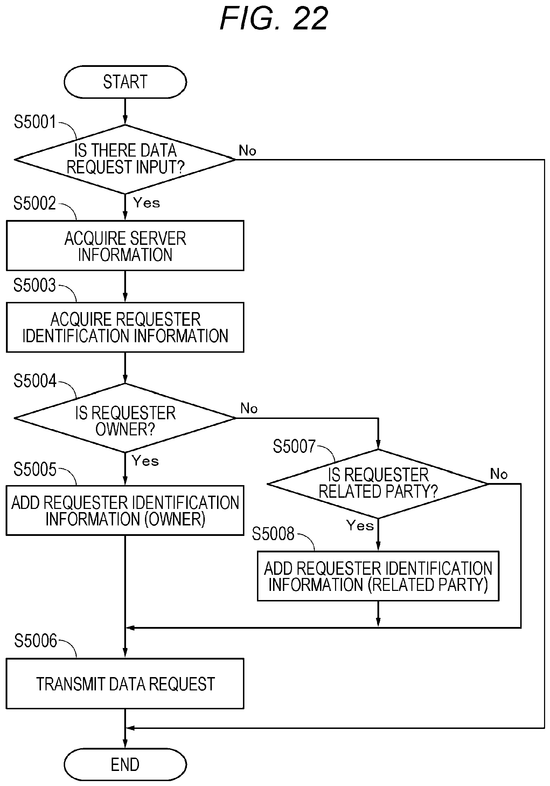

Next, a process for requesting data from the server 3000 in the terminal device 1000 will be described with reference to a flowchart of Fig. 22. This process is similar for all of the owner terminal device 1000A, the related party terminal device 1000B, and the third party terminal device 1000C. A request process is performed by the request processing unit 1005 of the terminal device 1000.

First, in step S5001, it is determined whether or not there is an input from the requester to the terminal device 1000 to give an instruction on a request to the server 3000, and in a case where the input exists, the process proceeds to step S5002 (Yes in step S5001).

Next, in step S5002, information specifying the server 3000 that stores the requested data is acquired from the input to the terminal device 1000 of the requester. Next, in step S5003, information for identifying the requester who requests the data (requester identification information) is acquired from the input to the terminal device 1000.

Next, in step S5004, it is determined whether or not there is information that specifies the requester as the owner of the data in the requester identification information, and in a case where there is information that specifies the requester as the owner, the process proceeds to step S5005 (Yes in step S5004).

Next, in step S5005, information indicating that the requester is the owner is added to the data request communication frame as the requester identification information. Then, by transmitting the data request communication frame in step S5006, the terminal device 1000 requests the server 3000 for the data.

The description returns to step S5004. In a case where there is no information that specifies the requester as the owner of the data in the requester information, the process proceeds to step S5007 (No in step S5004).

Next, in step S5007, it is determined whether or not there is information that specifies the requester as a related party in the requester information, and in a case where there is information that specifies that, the process proceeds to step S5008 (Yes in step S5007).

Next, in step S5008, information indicating that the requester is a related party is added as the requester identification information in the data request communication frame. Then, by transmitting the data request communication frame in step S5006, the data request is transmitted from the terminal device to the server 3000.

On the other hand, the process in which there is no information that specifies the requester as a related party in step S5007 proceeds to step S5006, and the data request communication frame assuming that the requester is neither the owner nor the related party is transmitted, thereby transmitting a data request from the terminal device to the server 3000. In this case, there is no information in the requester identification information of the data request communication frame, and thus the server 3000 that receives this determines that the requester is a third party.

### [2-10. Response process to request in server 3000]

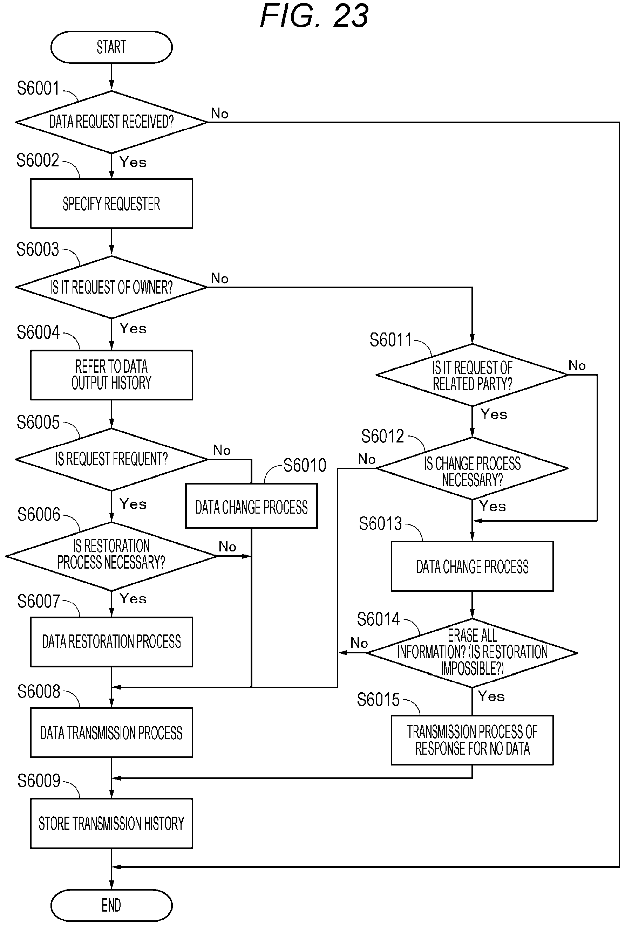

Next, details of a response process in the server 3000 to the request from the terminal device 1000 will be described with reference to a flowchart of Fig. 23.

First, in a case where the server 3000 receives a request for data in step S6001, the process proceeds to step S6002 (Yes in step S6001) to determine who the requester is.

In a case where the request is from the owner terminal device 1000A as a result of the determination, the process proceeds from step S6003 to step S6004 (Yes in step S6003), and the past transmission history of the requested data is referred to. This can be done by checking the history managed by the history management unit 3006.

Then, if the requested data is frequently requested, the process proceeds from step S6005 to step S6006 (Yes in step S6005). Here, whether or not the data is frequently requested can be determined on the basis of various criteria. For example, it is determined to be frequently requested in a case where the request for the data is made a number of times equal to or more than a threshold within a predetermined period, or in a case where the period between requests for data is equal to or less than a predetermined length, or the like.

Next, in step S6006, it is determined whether or not a restoration process of data is necessary upon outputting data. As described in step S2019 of Fig. 18, the determination as to whether or not this restoration process is necessary is a case where the requested data has already been subjected to the change process at that time point, but the data is restored to a state of not being subjected to the change process and then transmitted.

In a case where the data restoration process is necessary, the process proceeds to step S6007 (Yes in step S6006), and the restoration process is performed on the data. Then, in step S6008, the server 3000 transmits the data requested from the owner terminal device 1000A to the owner terminal device 1000A. Further, in step S6009, the server 3000 updates the data transmission history.

The description returns to step S6006. In a case where the data restoration process is not necessary, the process proceeds to step S6008 (No in step S6006). Then, the data is transmitted in step S6008 and the transmission history is updated in step S6009 without restoring the data.

The description returns to step S6005. In a case where the requested data is not requested frequently, the process proceeds to step S6010 (No in step S6005). Next, in step S6010, the data is subjected to the change process. Then, the data is transmitted in step S6008 and the transmission history is updated in step S6009. Thus, data that is not frequently requested is transmitted to the requester in a state of being subjected to the change process.

The description returns to step S6003. In a case where the request is not from the owner in step S6003, the process proceeds to step S6011 (No in step S6003). Next, in step S6011, the server 3000 verifies the related party identification information and determines whether or not the request is from the related party terminal device 1000B. That is, if the requester is a related party, the related party identification information that matches the contents of the related party identification information registered in advance is added.

In a case where the request is from the related party terminal device 1000B, the process proceeds to step S6012 (Yes in step S6011), and the server 3000 determines whether the data needs to be subjected to the change process. A case where the data to be transmitted to the related party terminal device 1000B is subjected to the change process is a case where data that has not been requested by the user for a predetermined period is requested as described above. Therefore, the server 3000 determines this by checking the transmission history of the data requested from the related party terminal device 1000B.

In a case where the deterioration process is not required, the process proceeds to step S6008 (No in step S6011), the data is transmitted and the transmission history in step S6009 is updated.

On the other hand, in a case where the data needs to be subjected to the change process in step S6012, the process proceeds to step S6013 (Yes in step S6012), and the server 3000 performs change process on the data.

Next, in step S6014, the server 3000 determines whether or not all information of the data that has been subjected to the change process in step S6013 has vanished. When the data is subjected to the change process multiple times, information that the data has decreases each time, and at a time point when the degree of change of the data finally reaches 100%, all the information that the data has vanishes. This is because when the information has completely vanished, the data cannot be transmitted to the related party terminal device 1000B, and the server 3000 transmits a response indicating that the requested data does not exist to the related party terminal device 1000B.

In a case where all information of the data has not vanished, the process proceeds to step S6008 (No in step S6014), the data is transmitted, and the transmission history in step S6009 is updated.

On the other hand, in a case where all information of the data has vanished, the process proceeds to step S6015 (Yes in step S6014). Then, in step S6015, the server 3000 transmits a response indicating that the requested data does not exist to the related party terminal device 1000B. Note that in this case, instead of the response indicating that the data does not exist, the data itself may be transmitted to the related party terminal device 1000B, but the data in which all information has vanished by the change process may be transmitted.

Then, in step S6009, the server 3000 updates the transmission history.

The description returns to step S6011. In a case where it is determined in step S6011 that the request is not from the related party terminal device 1000B, it is a request from the third party terminal device 1000C. In this case, the process proceeds to step S6013 (No in step S6011).

Next, in step S6013, the server 3000 performs the change process on the data. Then, the data is transmitted to the third party terminal device 1000C in the processes of steps S6013 to 6015 and steps S6008 and 6009.

### [2-11. User interface]

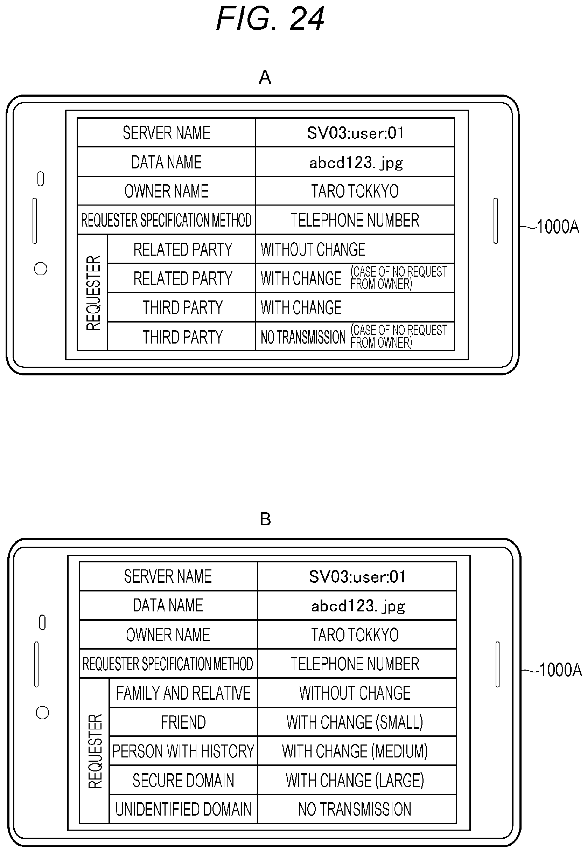

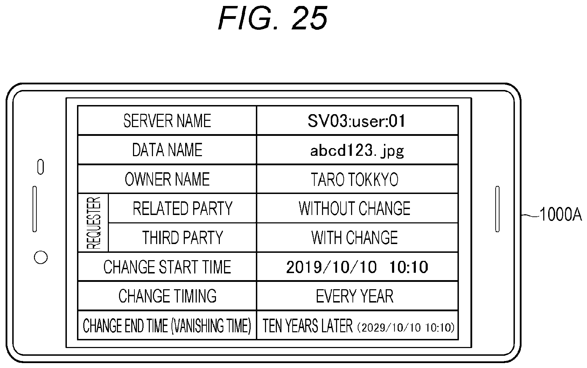

Next, a user interface in the owner terminal device 1000A when the information providing system 10 is used will be described. In Figs. 24 and 25, the terminal device 1000A will be described as a smartphone. This user interface is an example of a user interface for the owner to set the change-output parameter on the server 3000.

As illustrated in Fig. 24A, items input by the user include a server name, a data name, an owner name, a requester specification method, and a change process for each requester.

The "server name" is an item for specifying a location where data as a target of the change process is stored. The "data name" is an item for specifying data as a target of the change process. The "owner name" is an item indicating the owner of the data as a target of the change process.

The "requester specification method" is an item indicating a method for checking who is a requester who requests data from the server 3000 and who is a related party. The telephone number is just an example, and it may be the biometric information of the requester, the address information of the terminal device, the device ID, the password, or the like.

The "requester" is an item for setting whether or not to perform the change process for a data request from a related party or a third party, and whether or not to transmit data. Note that as illustrated in Fig. 24B, it may be possible to more specifically set classifications of a related party and a third party in the item of "requester".

Furthermore, the server 3000 may automatically set the change process for the related party or the third party without the owner setting the change process for each requester. Furthermore, the server 3000 may determine the degree of relationship between the owner and the requester, and the server 3000 may set the change process for every requester according to the determination result. The degree of relationship can be determined on the basis of, for example, the number of communications between the owner and the requester, the frequency of communications, whether or not the person is in the telephone directory of the terminal device, or the like. In order to do this, it is necessary to transmit the telephone directory, communication history information, and the like of the owner terminal device 1000A from the owner terminal device 1000A to the server 3000. Furthermore, in a case where the server 3000 can acquire the telephone directory of the owner terminal device 1000A and the telephone directory of the terminal device of the requester, the requester can be determined to be a related party in a case where contact information of the requester is present in the telephone directory of the owner terminal device 1000A and contact information of the owner is present in the telephone directory of the terminal device of the requester.

In Fig. 24B, requesters are categorized into family and relative, friend, person with history, secure domain, and unidentified domain. Then, the content of the change process corresponding to each requester is set. As illustrated in Fig. ?B, the degree of change may be different depending on the classification of the requester.

Moreover, as illustrated in Fig. 25, it may be possible to set a change process start time, a change timing, and a change end time as in the first embodiment.

### <3. Modification example>

Although the embodiments of the present technology have been specifically described above, the present technology is not limited to the above-described embodiment, and various modifications based on the technical idea of the present technology are possible.

In a case where the data as a processing target is a program, a change process such as stopping a part of the function of the program, preventing a part of the function from operating, or lowering performance of the function may be performed. For example, by applying such a change process to a program that performs motion control of a robot, it is possible to reproduce how movement of the robot changes over time and the robot ages, or the like.

Furthermore, it is also possible to reproduce how a robot ages or the like by setting the target of the change process to data stored in a storage medium provided in the robot and reducing information that the data has progressively over time.

Moreover, in a case where the target of the change process is data possessed by the robot described above, the change condition and the end condition may be a moving distance of the robot, the number of times the battery of the robot is charged, and the like in addition to the passage of time and the number of accesses to the data.

The change process for the data may be either reversible change or irreversible change. The user may be allowed to select and set either one.

The change process may be not only a change in which information that the data has is reduced as if quality is deteriorated progressively, but also a change in which quality is improved. For example, an image in a state where the resolution is lowered in image data is assumed as an image before the change process, increasing the resolution every time the change condition is satisfied, or the like is performed.

Furthermore, the information processing unit 200 may have a function such that in a case where there is no access to data for a specified period or in a case where the number of accesses is less than a specified number, the data is considered unnecessary and may be deleted, and it is proposed to the user to apply the present technology. The proposal can be made, for example, by displaying a predetermined message on the display unit 105 of the terminal device 100.

Furthermore, the data as a processing target is duplicated, one data is subjected to the change process every time the change condition is satisfied as described above, and the other data is stored without being changed. Then, data that has been subjected to the change process or data that has not been subjected to the change process may be output depending on the type of the user who requests the data, or the like. Thus, it is possible for the owner of the data to supply changed data to a particular user and unchanged data to another particular user.

The present technology can have configurations as follows.
(1) An information processing device including:
   a condition setting unit that sets a change condition that is a condition for changing data; and
   a data processing unit that changes the data in a case where the change condition is satisfied.
(2) The information processing device according to (1), in which
   the condition setting unit further sets an end condition that is a condition for ending the change of the data; and
   the data processing unit changes the data in a case where the change condition is satisfied until the end condition is satisfied.
(3) The information processing device according to (2), in which a plurality of the change conditions is set until the end condition is satisfied.
(4) The information processing device according to any one of (1) to (3), in which as the change, information that the data has is decreased.
(5) The information processing device according to (2), in which information related to the data is erased at a time point when the end condition is satisfied.
(6) The information processing device according to any one of (1) to (5), in which as the change, a degree of recognizability of the information that the data has is lowered.
(7) The information processing device according to any one of (1) to (6), in which the end condition is a date and/or a time.
(8) The information processing device according to any one of (1) to (7), in which the end condition is an elapsed time from the predetermined time point.
(9) The information processing device according to any one of (1) to (8), in which the change condition is a date and/or a time.
(10) The information processing device according to (2), in which the information that the data has becomes unrecognizable at a time point when the end condition is satisfied.
(11) The information processing device according to (2), in which the end condition is at least one of a date, a time, an elapsed time from the predetermined time point, or a number of accesses to the data.
(12) The information processing device according to any one of (1) to (10), in which the change condition is at least one of a date, a time, an elapsed time from a predetermined time point, or a number of accesses to the data.
(13) The information processing device according to claim 1 of any one of (1) to (12), in which the change condition is the number of accesses to the data.
(14) The information processing device according to any one of (1) to (13), in which the data is deleted in a case where the end condition is satisfied.
(15) The information processing device according to (2), in which the data exists even after the end condition is satisfied.
(16) The information processing device according to any one of (1) to (15), in which the data is an image, and a composition range of the image is narrowed as the change.
(17) The information processing device according to any one of (1) to (16), in which the data is an image, and contrast of the image is reduced as the change.
(18) The information processing device according to any one of (1) to (17), in which the data is an image, and a number of subjects in the image is reduced as the change.
(19) An information processing method including:
   setting a change condition that is a condition for changing data; and
   changing the data in a case where the change condition is satisfied.
(20) An information processing program that causes a computer to execute an information processing method including:
   setting a change condition that is a condition for changing data; and
   changing the data in a case where the change condition is satisfied.
(21) The information processing device according to any one of (1) to (18), in which
   the data is stored in a storage unit, and
   the data processing unit changes the data with a relationship between a requester requesting the data and an owner of the data being the change condition.
(22) The information processing device according to (21), in which the data processing unit changes the data in a case where the requester is a person who does not have a predetermined relationship with the owner of the data.
(23) The information processing device according to (21) or (22), in which the data processing unit does not change the data in a case where the requester is the owner himself or herself of the data or a person who has a predetermined relationship with the owner of the data.
(24) The information processing device according to any one of (21) to (23), in which the data processing unit changes the data in a case where the owner has not requested for the data for a predetermined period and the requester is the owner of the data.
(25) The information processing device according to any one of (21) to (24), in which the data processing unit changes the data in a case where the owner has not requested for the data for a predetermined period and the requester has a predetermined relationship with the owner of the data.
(26) The information processing device according to any one of (21) to (25), in which the data processing unit erases all information that the data has as the change in a case where the requester is a person who does not have a predetermined relationship with the owner of the data in a state where the owner has not requested for the data for a predetermined period, or in a case where the end condition is satisfied.
(27) The information processing device according to any one of (21) to (26), in which in a case where the owner has not requested for the data for a predetermined period and the data is changed, and in a case where the owner requests for the data thereafter and the requester is the owner of the data, the data processing unit restores the data to a state before the data is changed.
(28) The information processing device according to any one of (21) to (27), in which in a case where the data processing unit erases all information that the data has as the change, and thereafter there is a request for the data, the server notifies the requester that the data does not exist.
(29) The information processing device according to any one of (21) to (28), in which the data is collected by a data collection device and transmitted from the data collection device to the server.
(30) The information processing device according to any one of (21) to (29), in which the data is transmitted from the server to the terminal device of the requester.

### REFERENCE SIGNS LIST

- 100: Terminal device
- 200, 3008: Information processing unit
- 201: Condition setting unit
- 203, 3011: Data processing unit

## Claims

1. An information processing device comprising:
a condition setting unit that sets a change condition that is a condition for changing data; and
a data processing unit that changes the data in a case where the change condition is satisfied.

2. The information processing device according to claim 1, wherein
the condition setting unit further sets an end condition that is a condition for ending the change of the data; and
the data processing unit changes the data in a case where the change condition is satisfied until the end condition is satisfied.

3. The information processing device according to claim 2, wherein a plurality of the change conditions is set until the end condition is satisfied.

4. The information processing device according to claim 1, wherein as the change, information that the data has is decreased.

5. The information processing device according to claim 2, wherein information related to the data is erased at a time point when the end condition is satisfied.

6. The information processing device according to claim 1, wherein as the change, a degree of recognizability of the information that the data has is lowered.

7. The information processing device according to claim 2, wherein the information that the data has becomes unrecognizable at a time point when the end condition is satisfied.

8. The information processing device according to claim 2, wherein the end condition is at least one of a date, a time, an elapsed time from the predetermined time point, or a number of accesses to the data.

9. The information processing device according to claim 1, wherein the change condition is at least one of a date, a time, an elapsed time from a predetermined time point, or a number of accesses to the data.

10. The information processing device according to claim 2, wherein the data exists even after the end condition is satisfied.

11. The information processing device according to claim 1, wherein the data is an image, and a composition range of the image is narrowed as the change.

12. The information processing device according to claim 1, wherein the data is an image, and contrast of the image is reduced as the change.

13. The information processing device according to claim 1, wherein the data is an image, and a number of subjects in the image is reduced as the change.

14. An information processing method comprising:
setting a change condition that is a condition for changing data; and
changing the data in a case where the change condition is satisfied.

15. An information processing program that causes a computer to execute an information processing method comprising:
setting a change condition that is a condition for changing data; and
changing the data in a case where the change condition is satisfied.

16. The information processing device according to claim 1, wherein
the data is stored in a storage unit, and
the data processing unit changes the data with a relationship between a requester requesting the data and an owner of the data being the change condition.

17. The information processing device according to claim 16, wherein the data processing unit does not change the data in a case where the requester is the owner himself or herself of the data or a person who has a predetermined relationship with the owner of the data.

18. The information processing device according to claim 16, wherein the data processing unit erases all information that the data has as the change in a case where the requester is a person who does not have a predetermined relationship with the owner of the data in a state where the owner has not requested for the data for a predetermined period, or in a case where the end condition is satisfied.

19. The information processing device according to claim 16, wherein in a case where the owner has not requested for the data for a predetermined period and the data is changed, and in a case where the owner requests for the data thereafter and the requester is the owner of the data, the data processing unit restores the data to a state before the data is changed.

20. The information processing device according to claim 16, wherein in a case where the data processing unit erases all information that the data has as the change, and thereafter there is a request for the data, the server notifies the requester that the data does not exist.
